(19)

Europäisches
Patentamt
European
Patent Office
Office européen
des brevets

(11) **EP 2 432 210 A2**

(12) **EUROPEAN PATENT APPLICATION**

(43) Date of publication:
21.03.2012 Bulletin 2012/12

(51) Int Cl.:
*H04N 1/23* (2006.01)          *H04N 1/32* (2006.01)

(21) Application number: 11181704.5

(22) Date of filing: 16.09.2011

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(30) Priority: 16.09.2010 JP 2010208210
16.09.2010 JP 2010208211
16.09.2010 JP 2010208212

(71) Applicant: **Ricoh Company, Ltd.**
**Tokyo 143-8555 (JP)**

(72) Inventors:
• **Nagase, Tatsuya**
**Ohta-ku, Tokyo 143-8555 (JP)**

• **Yagishita, Takahiro**
**Ohta-ku, Tokyo 143-8555 (JP)**
• **Honda, Tadashi**
**Ohta-ku, Tokyo 143-8555 (JP)**
• **Hara, Junichi**
**Ohta-ku, Tokyo 143-8555 (JP)**
• **Yamagata, Junichi**
**Ohta-ku, Tokyo 143-8555 (JP)**
• **Ishizu, Taeko**
**Ohta-ku, Tokyo 143-8555 (JP)**

(74) Representative: **White, Duncan Rohan**
**Marks & Clerk LLP**
**90 Long Acre**
**London**
**WC2E 9RA (GB)**

(54) **Print correction using additional data embedded in a printed image**

(57)     A disclosed image processing system including a plurality of image processing apparatuses (1A, 1B,...) connected by a network (2) and further includes an image printing part (106) outputting a print by printing based on image information to be printed with a first image processing apparatus (1A); an image reading part (107) reading an image of the print and generating read image information with a second image processing apparatus (1B); a correction information generating part (112) generating a correction requirement for a print function of the first image processing apparatus (1A) and correction information containing a correction content based on read image characteristic information indicative of characteristics of the read image information, print image characteristic information indicative of the image information to be printed, or the read image characteristic information and the print image characteristic information; and a correction executing part (118) carrying out a correction for the print function based on the correction information in the first image processing apparatus (1A).

FIG.5

ADDITIONAL INFORMATION

| PRINT IMAGE CHARACTERISTIC INFORMATION |
| APPARATUS INFORMATION OF THE PRINTING SIDE APPARATUS (APPARATUS ID) |
| PRINT DATE |
| CALCULATING METHOD |
| CORRECTION REQUIRING APPARATUS INFORMATION (PRINTING SIDE APPARATUS OR READING SIDE APPARATUS) |
| ⋮ |

**Description**

1. Field of the Invention

The present invention generally relates to calibration, namely a technique of correcting a density in a printing function of an image processing apparatuses such as a Multi Function Peripheral or a Multi Function Printer (MFP).

2. Description of the Related Art

In an example of an engine for electronic photographs, a print density (a color shade or color depth in CYMK colors) greatly varies depending on models, manufacturing lots and aging. Therefore, the engine for electronic photographs may include a mechanism of observing a latent toner image and carrying out feedback control inside the engine for electronic photographs. However, only generation of the latent image can be controlled with this mechanism. It is not possible to feed back variation of the print density (the color shade or color depth in CYMK colors) caused between a process of transferring images to a fixing (fusing) process.

Then, a dedicated page (calibration sheet) is printed and a user scans the printed page to read an image thereof. Thereafter, the user manually feeds back the density of the actually printed density to correct the print density as disclosed in Patent Document 1.

As described, it is cumbersome work for the user of printing the calibration sheet, scanning the calibration sheet and correcting the print function in a positive manner.

At this time, if the printer does not have a scanning function, a scanner is connected to the printer for correcting the print image with the calibration sheet. This work is also cumbersome for the user.

Although the correction of the density is described, a similar problem exists in correcting other print functions such as a print position.

Patent Document 1: Japanese Laid-Open Patent Application No. 2007-295244.

SUMMARY OF THE INVENTION

Accordingly, embodiments of the present invention provide a novel and useful image processing system and image processing apparatus connected to a network solving one or more of the problems discussed above. More specifically, the embodiments of the present invention may provide an image processing system including image processing apparatuses connected via a network which can automatically correct the print function with association among the image processing apparatuses.

One aspect of the embodiments of the present invention may be to provide an image processing system including a plurality of image processing apparatuses connected by a network and further including an image printing part configured to output a print by printing based on image information to be printed with a first image processing apparatus; an image reading part configured to read an image of the print and generate read image information with a second image processing apparatus; a correction information generating part configured to generate a correction requirement for a print function of the first image processing apparatus and correction information containing a correction content in a case where the correction requirement is positive based on read image characteristic information indicative of characteristics of the read image information, print image characteristic information indicative of the image information to be printed, or the read image characteristic information and the print image characteristic information; and a correction executing part configured to carry out a correction for the print function based on the correction information in the first image processing apparatus.

Additional objects and advantages of the embodiments will be set forth in part in the description which follows, and in part will be clear from the description, or may be learned by practice of the invention. Objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

BRIEF DESCRIPTION OF THE DRAWINGS

FIG. 1 illustrates an example system structure of Embodiment 1.
FIG. 2 illustrates an example structure of an image forming apparatus.
FIG. 3 illustrates a function unit for associating two image processing apparatuses.
FIG. 4 illustrates example print image characteristic information.
FIG. 5 illustrates example additional information.
FIG. 6 illustrates example correction determination basic information.
FIG. 7 illustrates example correction information.
FIG. 8 illustrates a processing example of Embodiment 1.
FIG. 9 is a flowchart illustrating an example image printing process in an image processing apparatus 1A.
FIG. 10 is a flowchart illustrating an example image reading process in an image processing apparatus 1B.
FIG. 11 is a flowchart illustrating an example correction process in the image processing apparatus 1A.
FIG. 12 illustrates a function unit for associating two image processing apparatuses in Embodiment 2.

FIG. 13 illustrates example accumulation information.

FIG. 14 illustrates example additional information.

FIG. 15 is a flowchart illustrating an example image printing process in an image processing apparatus 301A of Embodiment 2.

FIG. 16 is a flowchart illustrating an example image reading process in an image processing apparatus 301 B of Embodiment 2.

FIG. 17 is a flowchart illustrating an example correction process in the image processing apparatus 301A of Embodiment 2.

FIG. 18 illustrates a function unit for associating two image processing apparatuses in Embodiment 3.

FIG. 19 illustrates example additional information.

FIG. 20 illustrates example read image characteristic information.

FIG. 21 illustrates example correction information.

FIG. 22 is a flowchart illustrating an example image printing process in an image processing apparatus 601A of Embodiment 3.

FIG. 23 is a flowchart illustrating an example image reading process in an image processing apparatus 601 B of Embodiment 3.

FIG. 24 is a flowchart illustrating an example correction process in the image processing apparatus 601A of Embodiment 3.

DETAILED DESCRIPTION OF THE PREFERRED EMBODIMENTS

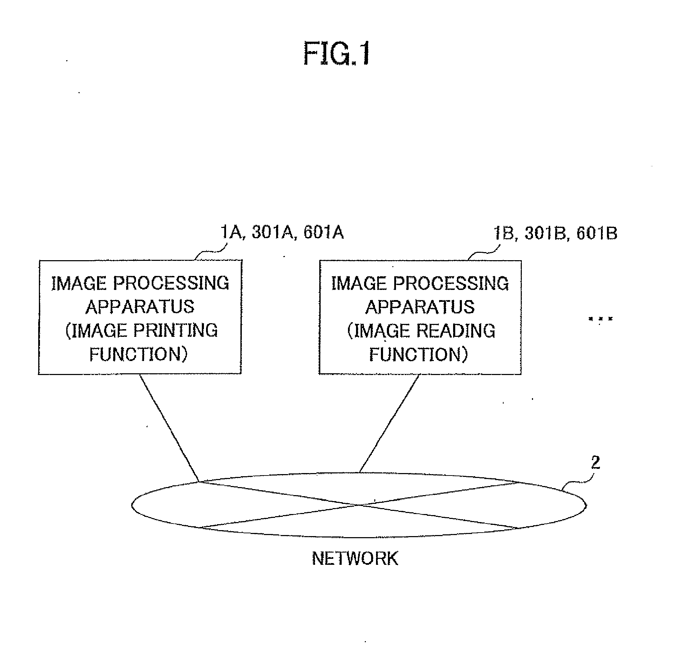

A description is given below, with reference to the FIG. 1 through FIG. 24 of embodiments of the present invention.

Reference symbols typically designate as follows:

1,1A,1B,301,301A,301B,601,601A,601B: image processing apparatus;
11: bus;
12: CPU;
13: memory;
14: non-volatile storage unit;
15: image input unit;
16: image output unit;
17: interface unit;
101: image input unit;
102: print image characteristic information generating unit;
103: additional information generating unit;
104: additional information image generating unit;
105: additional information image arranging unit;
106: image output unit;
107: image input unit;
108: additional information acquiring unit;
109: read image characteristic information generating unit;
110: information analyzing unit;
111: correction determination basic information generating unit;
112: correction information generating unit;
113: information sending unit;
114: information receiving unit;
115: information analyzing unit;
116: correction information generating unit;
117: correction information acquiring unit;
118: correction executing unit;
401: image input unit;
402: print image characteristic information generating unit;
403: print identification information generating unit;
404: print image characteristic information accumulating unit;
405: additional information generating unit;
406: additional information image generating unit;
407: additional information image arranging unit;
408: image output unit;
409: image input unit;
410: additional information acquiring unit;
411: read image characteristic information generating unit;
412: information analyzing unit;
413: correction determination basic information generating unit;
414: correction information generating unit;
415: print image characteristic information acquiring unit;
416: information sending unit;
417: information receiving unit;
418: information analyzing unit;
419: correction information generating unit;
420: correction information acquiring unit;
421: correction executing unit;
701: image input unit;
702: additional information generating unit;
703: additional information image generating unit;
704: additional information image arranging unit;
705: image output unit;
706: image input unit;
707: additional information acquiring unit;
708: read image characteristic information generating unit;
709: correction information generating unit;
710: information sending unit;
711: information receiving unit;
712: correction executing unit; and
2: network

Embodiment 1

(Structure)

FIG. 1 illustrates an example system structure of Embodiment 1.

Referring to FIG. 1, plural image processing apparatuses 1A, 1B... such as a multifunction peripheral (MFP), a printer, a facsimile (FAX) and a scanner are connected to a network 2 such as a local area network (LAN). Hereinafter, the image processing apparatus 1A has at least an image print function of a printer, a copy and a FAX (receive and print), and the image processing apparatus 1 B has at least an image read function of a scanner, a copy and a FAX (send).

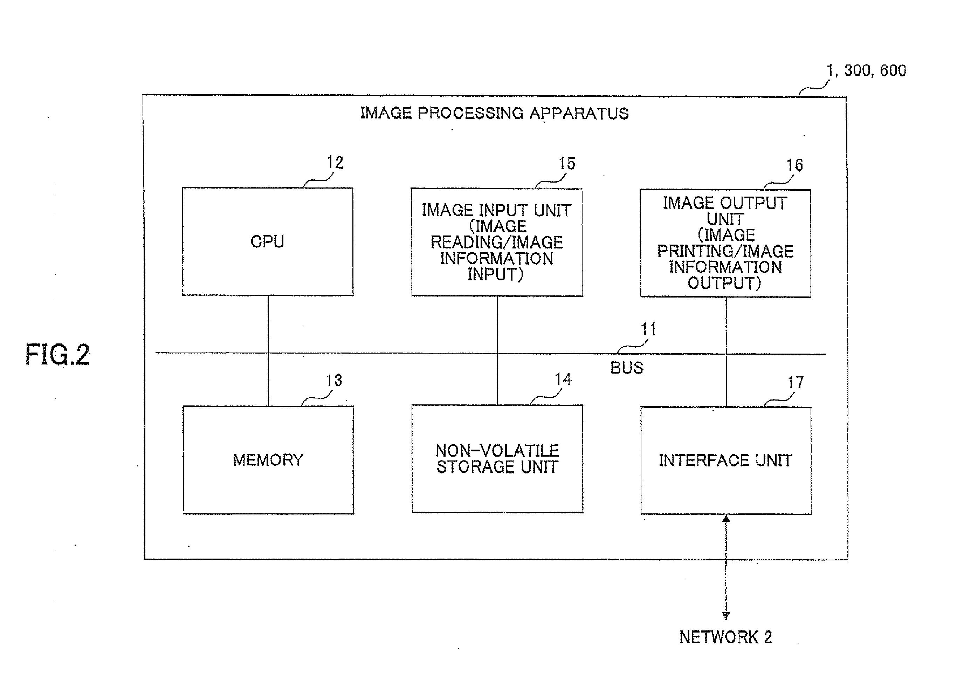

FIG. 2 illustrates an ordinary structure of the image processing apparatus 1 (1A, 1B...).

Referring to FIG. 2, the image processing apparatus 1 includes a central processing unit (CPU) 12 connected to a bus 11, a memory 13, a non-volatile storage unit 14, an image input unit 15, an image output unit 16, and an interface unit 17.

The CPU 12 carries out a main control of the image processing apparatus 1.

The memory 13 stores a program and data used for the control process in the CPU 12.

The non-volatile storage unit 14 is a memory unit such as a Hard Disk Drive (HDD) and a flash memory of which data are not erased even if the image processing apparatus 1 is turned off.

The image input unit 15 reads an image from an original with an image reading mechanism (a scanner engine) or the like and acquires image information to be printed from an external Personal Computer (PC), a FAX, or the like.

The image output unit 16 prints image information on a paper with an image printing function (a printer engine) or outputs the image information to an external Personal Computer (PC) or the like.

The interface unit 17 communicates information with external apparatuses via the network 2.

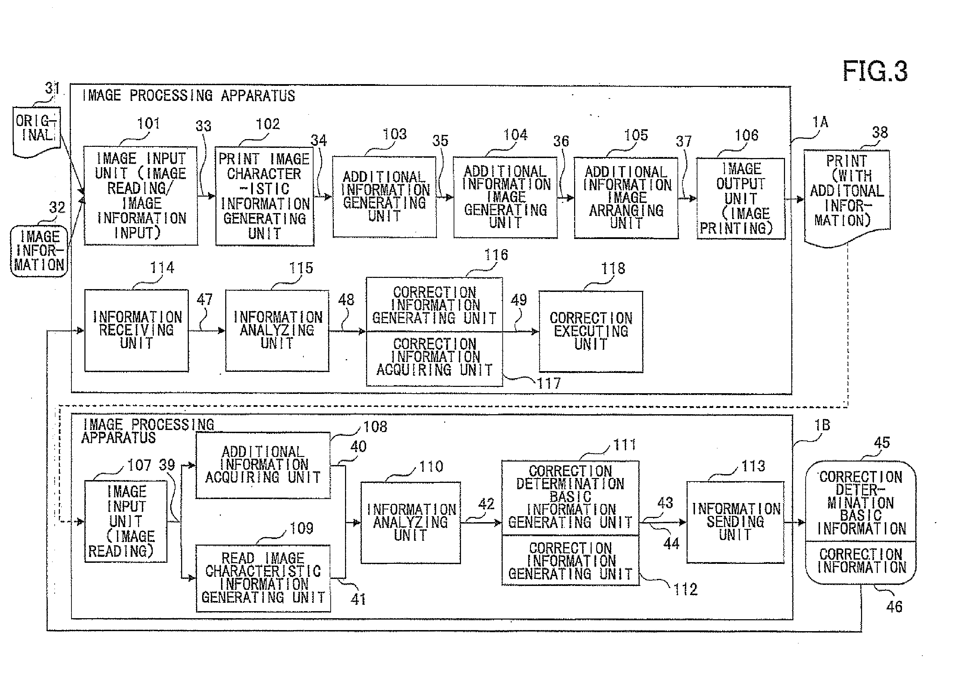

FIG. 3 illustrates a function unit for associating the image processing apparatuses 1A and 1 B.

Referring to FIG. 3, the image processing apparatus 1A provided on a side of inputting an original 31 or image information 32 and on a side of outputting a print 38 includes an image input unit 101, a print image characteristic information generating unit 102, an additional information generating unit 103, an additional information image generating unit 104, an additional information image arranging unit 105, an image output unit 106, an information receiving unit 114, an information analyzing unit 115, a correction information generating unit 116, a correction information acquiring unit 117, and a correction executing unit 118.

The image processing apparatus 1 B on a side of inputting the print 38 and on a side of sending correction determination basic information 45 or correction information 46 to the image processing apparatus 1A includes an image input unit 107, an additional information acquiring unit 108, a read image characteristic information generating unit 109, an information analyzing unit 110, a correction determination basic information generating unit 111, a correction information generating unit 112 and an information sending unit 113.

The image input unit 101 of the image processing apparatus 1A reads an original 31 or inputs the original 31 at a time of copying the original 31 and inputs the image information when a print is requested by a PC or a fax is sent, and outputs the image information to be printed 33.

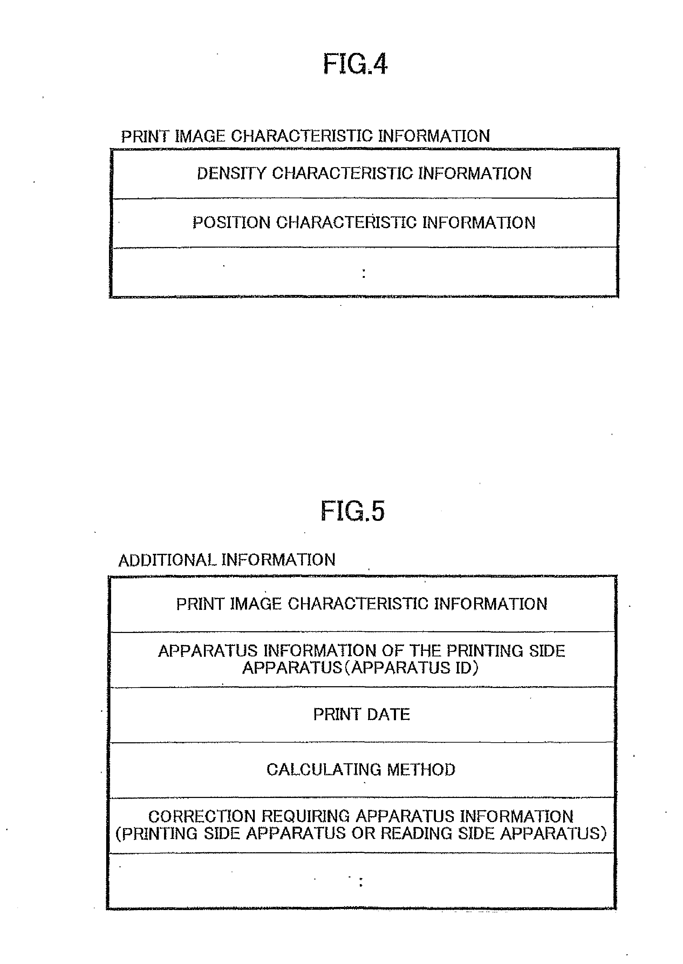

The print image characteristic information generating unit 102 has functions of generating print image characteristic information 34 from the image information to be printed 33 and outputting the generated print image characteristic information 34. FIG. 4 illustrates example print image characteristic information. The example print image characteristic information contains density characteristic information, position characteristic information and so on. The density characteristic information may be the average density of an entire image, the average density of designed portions of the entire image, a histogram of the density or the like. Instead of the density characteristic information and the position characteristic information, raw data of the image may be used. The density characteristic information, the position characteristic information or the like may be generated from the raw data of the image.

Referring back to FIG. 3, the additional information generating unit 103 has functions of generating additional information 35 using the print image characteristic information 34 and of outputting the additional information 35. FIG. 5 illustrates example additional information. The additional information contains print image characteristic information, apparatus information (an apparatus ID), print date and calculating method; correction requiring apparatus information of the printing side apparatus or the reading side apparatus; or the like.

Referring back to FIG. 3, the additional information image generating unit 104 has a function of generating an additional information image 35 in conformity with a generation algorithm of a bar code, a background design or the like from the additional information 35. The additional information image 36 is an image of the additional information expressed by an image such as the bar code and the background design.

The additional information image arranging unit 105 has functions of arranging the additional information image 36 on the image information to be printed 33 by merging or synthesizing the additional information image 36 and the image information and of outputting the print image information 37.

The image output unit 106 has a function of printing based on the print image information 37 and outputs the print 38. Additional information is added to the print 38.

The image input unit 107 of the image processing apparatus 1 B has functions of reading the print 38 at times of copying, FAX transmitting and scanning and outputting read image information 39.

The additional information acquiring unit 108 has functions of detecting the additional information images from the read image information 39 and outputting the additional information 40.

The read image characteristic information generating unit 109 has functions of generating read image characteristic information 41 from the read image information 39 and outputting the generated read image characteristic information 41. The read image characteristic information generating unit 109 is arranged in parallel with the additional information acquiring unit 108. The read image characteristic information 41 contains similar items to items of the image information to be printed illustrated in FIG. 4.

Referring back to FIG. 3, the information analyzing unit 110 has functions of analyzing the additional information 40, determining contents of processes based on correction requiring apparatus information (the printing side apparatus or reading side apparatus), and outputting analyzed result information 42. The analyzed result information 42 contains information of determining whether the correction is required in the reading side apparatus.

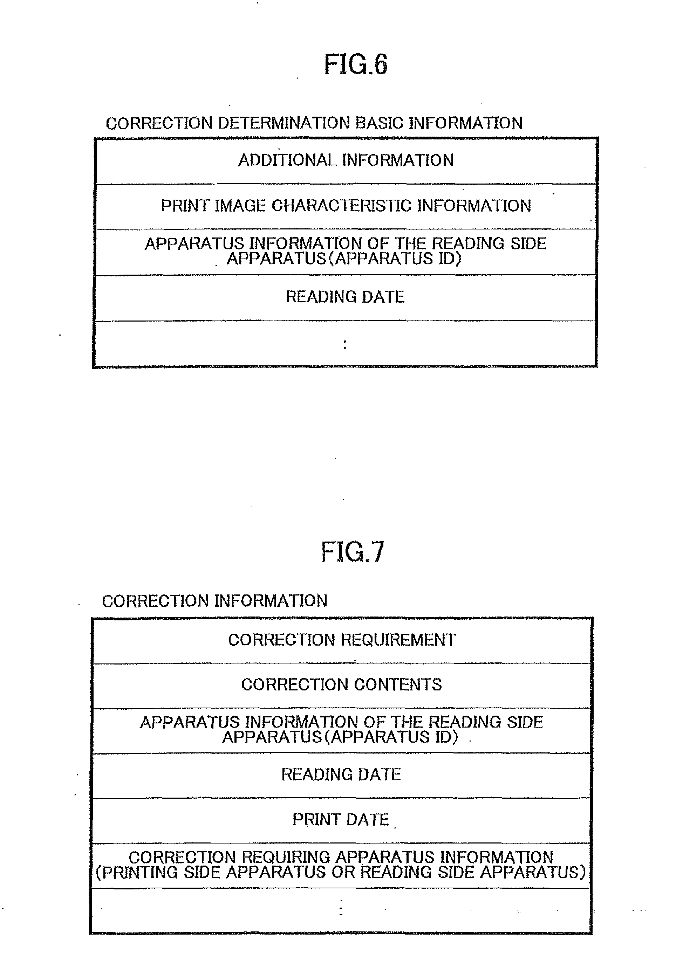

The correction determination basic information generating unit 111 has functions of operating in a case where the correction requiring apparatus information is on the printing side apparatus (the image processing apparatus 1A) and generating and outputting the correction determination basic information 43. FIG. 6 illustrates example correction determination basic information. The correction determination basic information contains additional information, read image characteristic information, apparatus information of the reading side apparatus (APPARATUS ID), a reading date and so on.

Referring back to FIG. 3, the correction information generating unit 112 has functions of operating when the correction requiring apparatus information indicates the reading side apparatus (the image processing apparatus 1 B), and of generating correction information 44 based on the read image characteristic information 41 and the print image characteristic information contained in the additional information 40 and outputting the generated correction information 44. FIG. 7 illustrates example correction information. The correction information contains items of a correction requirement, correction contents, apparatus information (apparatus ID) of a reading side apparatus, a reading date, a print date, correction requiring apparatus information (the printing side apparatus or the reading side apparatus).

Referring back to FIG. 3, the information sending unit 113 has functions of sending the correction determination basic information 43 from the correction determination basic information generating unit 111 as the correction determination basic information 45, and of sending the correction information 44 from the correction information generating unit 112 as the correction information 46 to the information processing apparatus 1A on the printing side.

The information receiving unit of the image processing apparatus 1A has functions of receiving the correction determination basic information 45 or the correction information 46 from the image processing apparatus 1 B and outputting these information items as received information 47.

The information analyzing unit 115 has functions of analyzing the received information 47 and determines contents of processes based on the correction requiring apparatus information (the printing side apparatus or the reading side apparatus) contained in the additional information of the correction determination basic information 45 or the correction information 46 and outputting the analyzed result information 48. The analyzed result information 48 contains information of determining whether the correction is required in the printing side apparatus.

The correction information generating unit 116 has functions of operating when the correction requiring apparatus information is the printing side apparatus (the image processing apparatus 1A) and generating the correction information 49 based on the read image characteristic information contained in the correction determination basic information 45 received as the received information 47 and print image characteristic information contained in the additional information of the correction determination basic information 45 and outputting the generated correction information 49. The correction information 49 is similar to the information illustrated in the correction information illustrated in FIG. 7. However, the correction requiring apparatus information (the printing side apparatus or the reading side apparatus) may not be used.

Referring back to FIG. 3, the correction information acquiring unit 117 has functions of operating when the correction requiring apparatus information indicates the reading side apparatus (the image processing apparatus 1B) and of outputting the correction information received as the received information 47 as the correction information 49 without a change.

The correction executing unit 118 has functions of correcting the density of the print function and the print position and so on of the image processing apparatus 1A based on the correction information 49 if the correction is required based on the correction information 49. Meanwhile, the correction executing unit 118 can correct only if predetermined conditions are satisfied in addition to the corrections at every time when the correction information 48 is given.

(Operations)

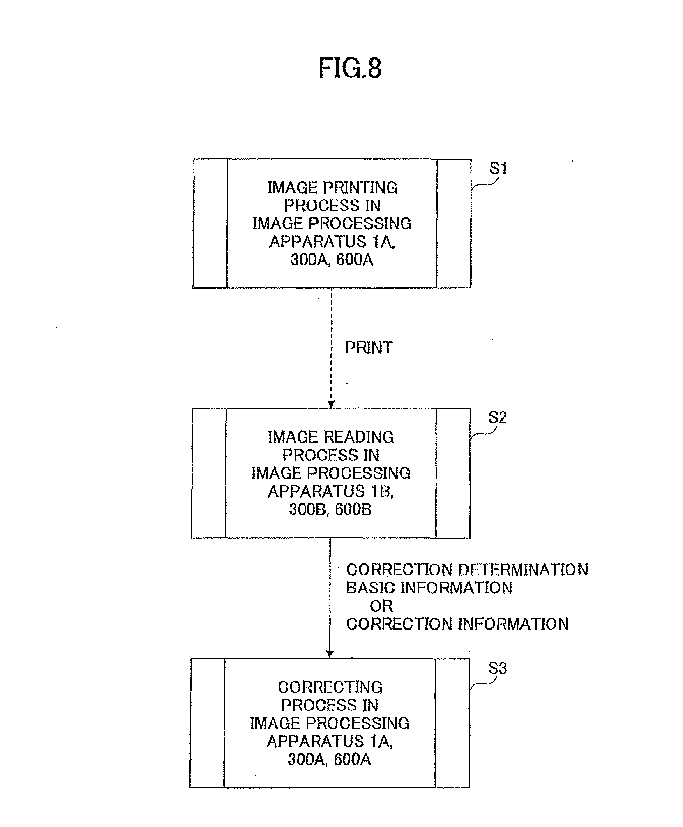

FIG. 8 illustrates a processing example of Embodiment 1.

Referring to FIG. 8, a user can carry out an image printing process with an image processing apparatus 1A without considering the correction of the print function in step S1. With this process, the print 38 is output (see FIG. 38). The image processing apparatus 1A on the print side may be any one of the image processing apparatuses in the network 2 as long as the above functions are provided.

Thereafter, the user reads the image of the print 38 with the image processing apparatus 1 B as one of routine practices in step S2. With this process, the correction determination basic information 45 or the correction information 46 are sent to the image processing apparatus 1A on the printing side. The image processing apparatus 1 B on the reading side may be any one of the image processing apparatuses in the network 2 as long as the above functions are provided.

When the image processing apparatus 1A on the reading side receives the correction determination basic information 45 or the correction information 46 from the image processing apparatus 1B, the image processing apparatus 1A carries out the correction process in step S3.

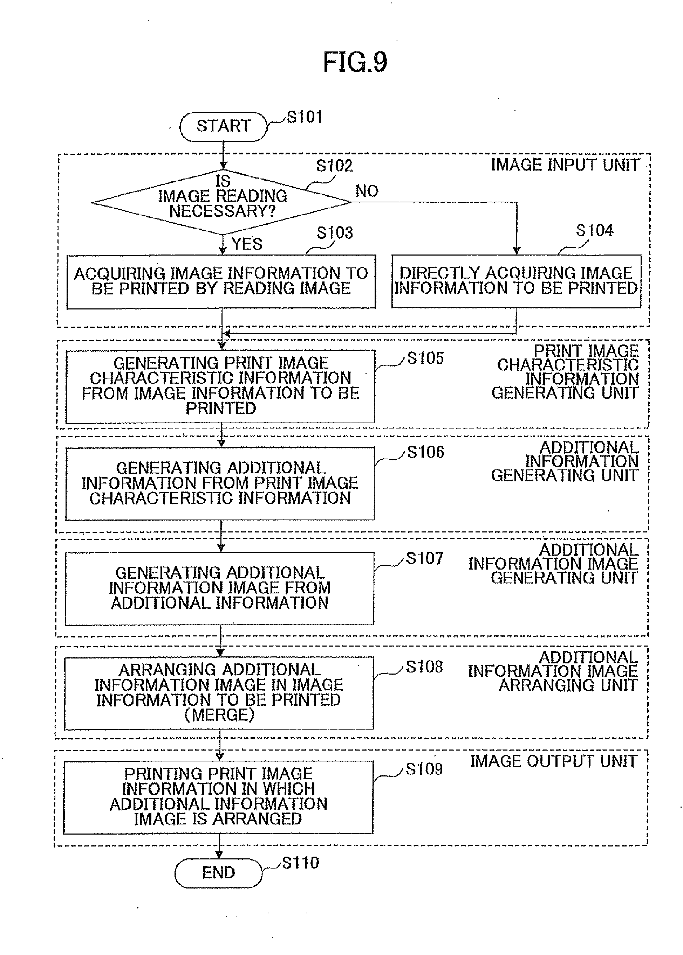

FIG. 9 is a flowchart illustrating an example image printing process (step S1 in FIG. 8) in an image processing apparatus 1A.

Referring to FIG. 9, after the image printing process is started in step S101, the image input unit 101 of the image processing apparatus 1A determines whether the image reading is necessary depending on a copy operation of the original 31, a FAX transmission operation of the original 31, or a print operation upon receipt of the image information 32 in step S102.

If it is determined that the image reading is necessary in YES of step S102, the image input unit 101 acquires the image information to be printed 33 by reading the image in step S103.

If it is determined that the image reading will not be done in NO of step S102, the image input unit 101 directly acquires the image information to be printed 33 by reading the image in step S104.

The print image characteristic information generating unit 102 generates the print image characteristic information 34 from the image information to be printed 33 in step S105. The image information to be printed 33 is analyzed, and the density characteristic information, the position characteristic information and so on are calculated to render the calculated to be the print image characteristic information 34. If the raw data of the image is used as the print image characteristic information 34 without change, the complicated analysis can be skipped.

The additional information generating unit 103 generates the additional information 35 from the print image characteristic information 34 in step S106. The apparatus information (the apparatus ID), the print date, the calculating method, the correction requiring apparatus information (the printing side apparatus or the reading side apparatus) and so on of printing side apparatus are added to the print image characteristic information to make the additional information.

Next, the additional information image generating unit 104 generates the additional information image 36 from the additional information 35 in step S107. Said differently, a picture of the additional information is created in conformity with a generation algorithm of a bar code, a background design or the like to thereby acquire the additional information image 36.

Then, the additional information image arranging unit 105 arranges the additional information image 36 on the image information to be printed 33 acquired by the image input unit 101 by merging or synthesizing the print image information 33 and the additional information image 36 in step S108.

Thereafter, the image output unit 106 prints the print image information 37 in which the additional information image 36 is arranged and outputs the print 38 in step S109. Thus, the process ends in step S110.

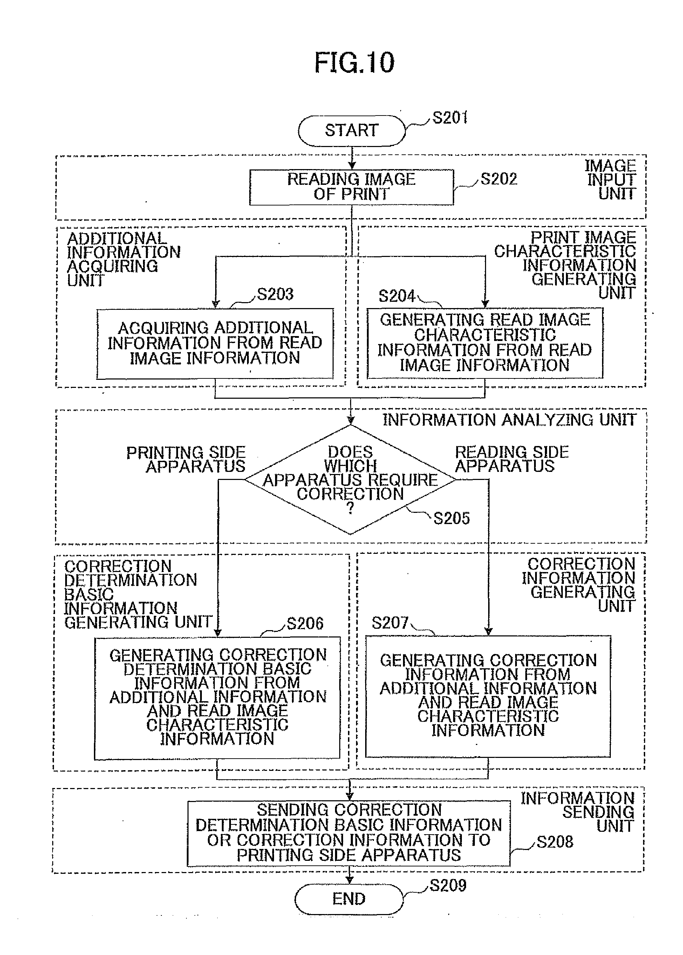

FIG. 10 is a flowchart illustrating an example image reading process (step S2 in FIG. 8) in an image processing apparatus 1B.

Referring to FIG. 10, after the image reading process is started in step S201, the image input unit 107 of the image processing apparatus 1 B reads an image of the print 38 and acquires the read image information 39 in step S202.

The additional information generating unit 108 detects the additional information 40 from the read image information 39 and acquires the additional information 40 in step S203. The additional information image has a form from which the bar code, the background design and so on are detectable. Therefore, the additional information is detected in consideration of the form.

The read image characteristic information generating unit 109 generates the read image characteristic information 41 from the read image information 39 in parallel with the process in the additional information acquiring unit 108 in step S204. The read image information 39 is analyzed, and the density characteristic information, the position characteristic information and so on are calculated to render the calculated to be the read image characteristic information 41. If the raw data of the image is used as the read image characteristic information 41 without change, the complicated analysis can be skipped.

Subsequently, the information analyzing unit 110 analyzes the additional information 40 and determines the content of the process based on the correction requiring apparatus information (the printing side apparatus or the reading side apparatus).

If the correction requiring apparatus information is the printing side apparatus (the image processing apparatus 1A) in "printing side apparatus" of step S205, the correction determination basic information generating unit 111 generates the additional information 40 and the correction determination basic information 43 from the read image characteristic information in step S206. Said differently, the correction determination basic information 43 is generated by adding the apparatus information, the reading date of the reading side apparatus (the own apparatus) and so on to the additional information 40 and the read image characteristic information 41.

If the correction requiring apparatus information is the reading side apparatus (the image processing apparatus 1B) in "reading side apparatus" of step S205, the correction information generating unit 112 generates the additional information 40 and the correction information 44 from the read image characteristic information 41 and so on in step S207. Said differently, the print image characteristic information contained in the additional information and the read image characteristic information 41 are compared. If a density difference, a positional difference or the like exceeds a predetermined threshold value, it is determined that the correction is necessary, and the correction contents are acquired as a value of canceling the density difference, the positional difference or the like. The correction information 44 is acquired by adding the apparatus information of the reading side apparatus (the own apparatus), the reading date, the print date(extracted from the additional information 40), the correction requiring apparatus information (the printing side apparatus or the reading side apparatus) and so on to the above.

The information sending unit 113 sends the correction determination basic information 43 generated by the correction determination basic information generating unit 111 as the correction determination basic information 45 or the correction information 44 generated by the correction information generating unit 112 as the correction information 46 to the image processing apparatus 1A on the printing side in step S208. Then, the process ends in step S209.

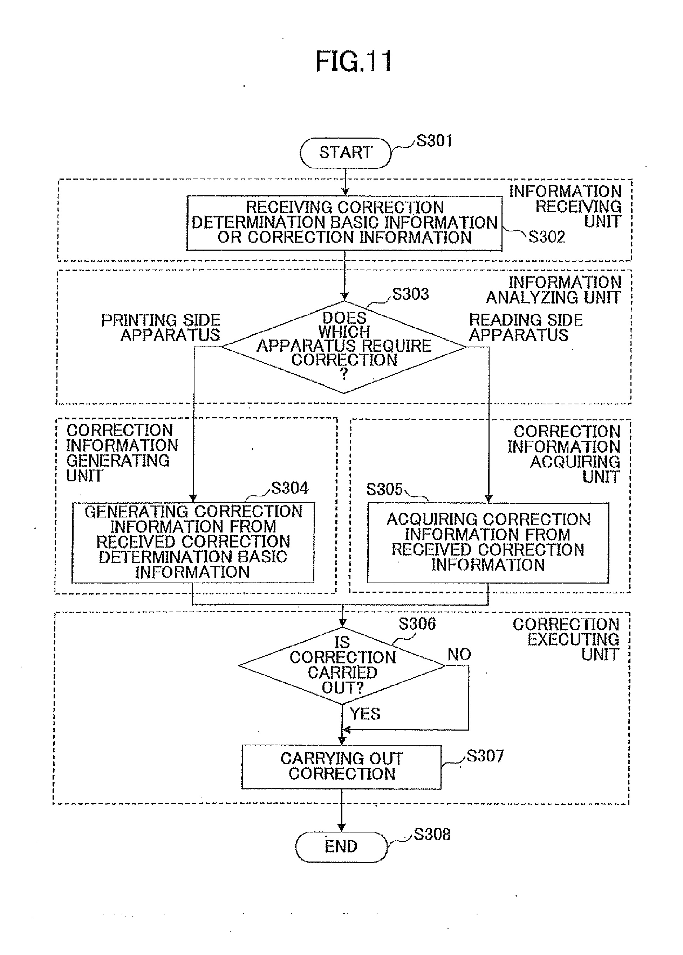

FIG. 11 is a flowchart illustrating an example correction process (step S3 in FIG. 8) in the image processing apparatus 1A.

Referring to FIG. 11, if the correction process is started in step S301, the information receiving unit 114 receives the correction determination basic information 45 or the correction information 46 to render it to be the received information 47 in step S302.

Then, the information analyzing unit 115 analyzes the received information 47 and determines contents of processes based on the correction requiring apparatus information (the printing side apparatus or the reading side apparatus) contained in the additional information of the correction determination basic information 45 or the correction information 46.

If the correction requiring apparatus information is the printing side apparatus (the image processing apparatus 1A) in "printing side apparatus" of step S303, the correction information generating unit 116 generates the correction information 49 from the correction determination basic information 45 in step S304. Said differently, the print image characteristic information contained in the additional information of the correction determination basic information 45 and the read image characteristic information are compared. If a density difference, a positional difference or the like exceeds a predetermined threshold value, it is determined that the correction is necessary, and the correction contents are acquired as a value of canceling the density difference, the positional difference or the like. Then, the correction information 49 is acquired by adding the apparatus information of the reading side apparatus (the apparatus information of the own apparatus), the reading date, the print date (extracted from the additional information 40) or the like to the correction contents.

If the correction requiring apparatus information is the reading side apparatus (the image processing apparatus 1 B) in "reading side apparatus" of step S303, the correction information acquiring unit 117 acquires the received correction information 46 as the correction information 49 in step S305.

Thereafter, the correction executing unit 118 determines whether correction is carried out in step S306. For example, it is determined whether the correction is carried out with the following criteria.

(1) When it is determined at every generation and acquisition of the correction information 49, if the correction requirement is negative, it is determined that the correction is not carried out. When the correction requirement is determined on the reading side, if the correction information 46 is sent by only one image processing apparatus 1B and the correction requirement is negative, the correction information 46 may not be sent. In this case, an item of the correction requirement in the correction information 46 becomes unnecessary.

(2) When the correction requirement has determined every generation and acquisition of the correction information 49, if the correction requirement is positive, the correction may immediately be carried out or the determination is further conducted by referring to the print date or the like. If the correction information 49 is based on the print 38 printed before a predetermined period from the current date by referring to the print date or the like, there is a likelihood that the correction contents are not appropriate for the current correction. Therefore, it may be determined that the correction is not carried out. Further, it is possible to prevent the correction from being carried out immediately after the start up of the image processing apparatus.

(3) It is possible to accumulate a predetermined number of correction information pieces 49 or accumulate the correction information 49 for a predetermined period under a control of the correction executing unit 118. Then, it is possible to determine whether the correction is to be carried out by comprehensively considering the accumulated correction information 49. For example, the correction requirements of the plural correction information pieces 49 and the correction contents in a case where the correction requirements are positive are ranked based on the number and print dates of the correction contents. By adopting the correction information 49 having the highest reliabilities, it is possible to determine whether the corrections are carried out. Meanwhile, the correction contents may be simply determined by majority vote.

Subsequently, the correction executing unit 118 corrects the density of the print function, the print position or the like in conformity with the correction contents in step S307. Then, the process ends in step S308.

Modified Example of Embodiment 1

Although, in Embodiment 1, the print image characteristic information is embedded in the print as the additional information in the image processing apparatus 1A on the printing side, the Embodiments are not limited thereto. For example, print image characteristic information such as raw data of an image may be accumulated in the image processing apparatus 1A in association with the print identification information and the print identification information may be contained in the additional information. With this, it is possible to reduce the data amount of the additional information. In this case, the print image characteristic information such as the raw data of the image can be acquired using the print identification information as a key from the image processing apparatuses 1A and 1B which determine the correction requirement.

Although in Embodiment 1, the correction requirement is determined based on the print image characteristic information and the read image characteristic information, the Embodiments are not limited thereto. For example, it is possible to determine the correction requirement with the image processing apparatus 1B based on the additional information such as the bar codes and the background design whose line and dot sizes are known. In this case, the correction requirement itself may be determined by the image processing apparatus 1A on the printing side.

Further, although the additional information is embedded in the print in Embodiment 1, the Embodiments are not limited thereto. For example, it is possible to use a "paper's finger print" inherent in each sheet of the paper for identifying the print instead of the above print identification information.

Embodiment 2

(Structure)

FIG. 1 illustrates an example system structure of Embodiment 2.

Referring to FIG. 1, plural image processing apparatuses 301A, 301 B... such as a multifunction peripheral (MFP), a printer, a facsimile (FAX) and a scanner are connected to a network 2 such as a local area network (LAN). Hereinafter, the image processing apparatus 301A has at least an image print function of a printer, a copy and a FAX (receive and print), and image processing apparatus 301 B has at least an image read function of a scanner, a copy and a FAX (send).

FIG. 2 illustrates an ordinary structure of the image processing apparatus 301 (301A, 301B...).

Referring to FIG. 2, the image processing apparatus 301 includes a central processing unit (CPU) 12 connected to a bus 11, a memory 13, a non-volatile storage unit 14, an image input unit 15, an image output unit 16, and an interface unit 17.

The CPU 12 carries out a main control of the image processing apparatus 1.

The memory 13 stores a program and data used for the control process in the CPU 12.

The non-volatile storage unit 14 is a memory unit such as a Hard Disk Drive (HDD) and a flash memory of which data are not erased even if the image processing apparatus 1 is turned off.

The image input unit 15 reads an image from an original with an image reading mechanism (a scanner engine) or the like and acquires image information to be printed from an external Personal Computer (PC), a FAX, or the like.

The image output unit 16 prints image information on a paper with an image printing function (a printer engine) or outputs the image information to an external Personal Computer (PC) or the like.

The interface unit 17 communicates information with external apparatuses via the network 2.

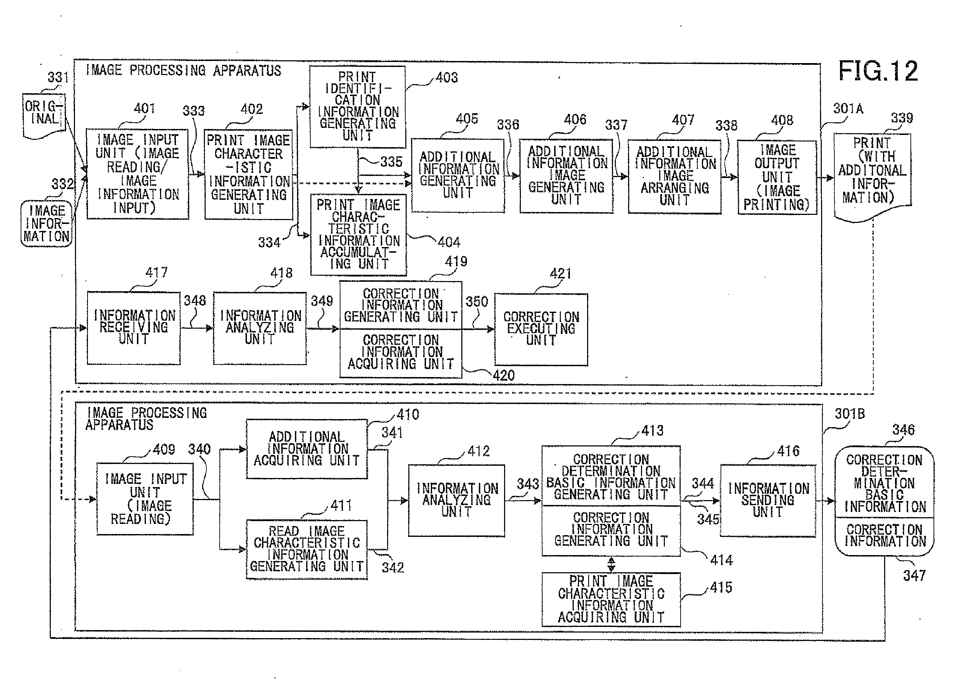

FIG. 12 illustrates a function unit for associating the image processing apparatuses 301A and 301 B.

Referring to FIG. 12, the image processing apparatus 301A provided on a side of inputting an original 331 or image information 332 and on a side of outputting a print 339 includes an image input unit 401, a print image characteristic information generating unit 402, a print identification information generating unit 403, a print image characteristic information accumulating unit 404, an additional information generating unit 405, an additional information image generating unit 406, an additional information image arranging unit 407, an image output unit 408, an information receiving unit 417, an information analyzing unit 418, a correction information generating unit 419, a correction information acquiring unit 420, and a correction executing unit 421.

The image processing apparatus 301 B on a side of inputting the print 339 and on a side of sending correction determination basic information 346 or correction information 347 to the image processing apparatus 301A includes an image input unit 409, an additional information acquiring unit 410, a read image characteristic information generating unit 411, an information analyzing unit 412, a correction determination basic information generating unit 413, a correction information generating unit 414 and an information sending unit 416.

The image input unit 401 of the image processing apparatus 301A reads the original 331 or inputs the original 331 at a time of copying the original 331 and inputs the image information 332 when a print is requested by a PC or a fax is sent, and outputs image information to be printed 333.

The print image characteristic information generating unit 402 has a function of generating print image characteristic information 334 from image information to be printed 333 and outputting the generated print image characteristic information 334. FIG. 4 illustrates example print image characteristic information. The example print image characteristic information contains density characteristic information, position characteristic information and so on. The density characteristic information may be the average density of an entire image, the average density of designed portions of the entire image, a histogram of the density or the like. Instead of the density characteristic information and the position characteristic information, raw data of the image may be used. The density characteristic information, the position characteristic information or the like may be generated from the raw data of the image. It depends on a predetermined setup whether the raw data of the image itself is the print image characteristic information or whether density characteristic information, position characteristic information or the like obtained by analyzing and summarizing an image to be printed is the print image characteristic information.

Referring back to FIG. 12, the print identification information generating unit 403 has a function of generating print identification information 335 for identifying the print 339 and outputs the generated print identification information 335. The original 331 to be printed does not identify the image information 332 and specifies the print 339. Therefore, it is sufficient to issue a unique identifier every printing.

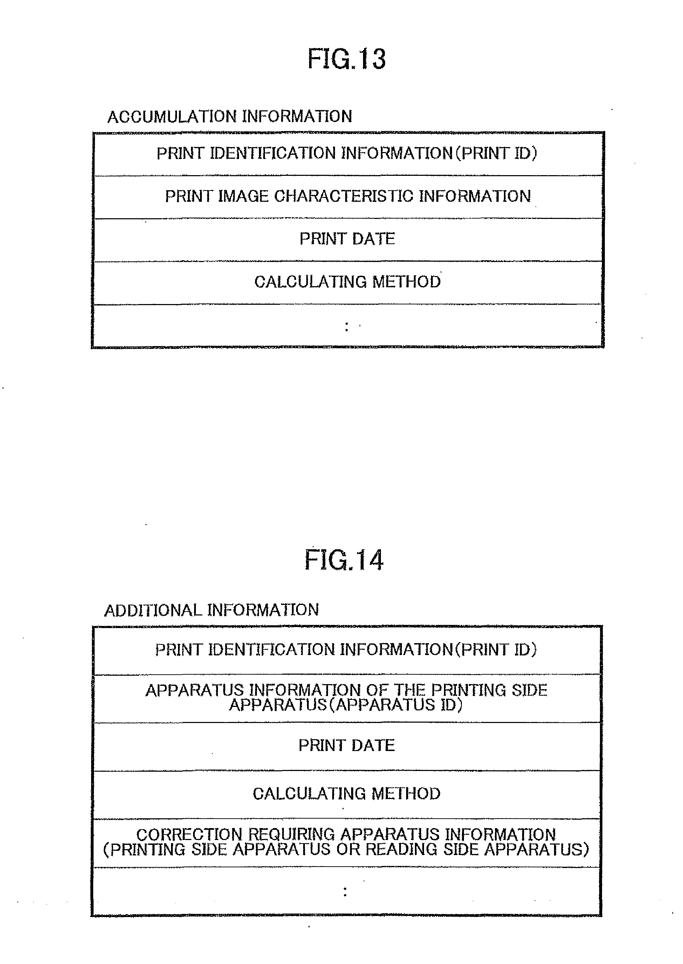

The print image characteristic information accumulating unit 404 has a function of accumulating print image characteristic information 334 in a non-volatile storage unit 14 or the like in association with the print identification information 335. FIG. 13 illustrates example accumulation information. The example accumulation information contains items such as print identification information (print ID), print image characteristic information, print date and a calculating method.

Referring back to FIG. 12, the additional information generating unit 405 has a function of generating additional information 336 using the print identification information 335 or the like and outputting the additional information 35. FIG. 14 illustrates example additional information. The example additional information contains print identification information (print ID), apparatus information on the printing side (an apparatus ID), print date and calculating method, correction requiring apparatus information of the printing side apparatus or the reading side apparatus, and so on. Because the print date and the calculating method are acquired along with the print image characteristic information, these can be omitted.

Referring back to FIG. 12, the additional information image generating unit 406 has a function of generating an additional information image 337 in conformity with a generation algorithm of a bar code, a background design or the like from the additional information 336. The additional information image 337 is an image of the additional information expressed by an image such as the bar code and the background design.

The additional information image arranging unit 407 has a function of arranging the additional information image 337 on the print image information 333 by merging or synthesizing these and a function of outputting the image information 338.

The image output unit 408 has a function of printing based on the print image information 338 and outputs the print 339. Additional information is added to the print 339.

The image input unit 409 of the image processing apparatus 301 B has functions of reading the print 339 at times of copying, FAX transmitting and scanning and outputting read image information 340.

The additional information acquiring unit 410 has functions of detecting the additional information image from the read image information 340 and outputting the additional information 341.

The read image characteristic information generating unit 411 has functions of generating read image characteristic information 342 from the read image information 340 and outputting the generated read image characteristic information 342. The read image characteristic information generating unit 410 is arranged in parallel with the additional information acquiring unit 410. The read image characteristic information 342 contains similar items to items of the image information to be printed illustrated in FIG. 4.

Referring back to FIG. 12, the information analyzing unit 412 has functions of analyzing the additional information 341, determining contents of processes based on correction requiring apparatus information (the printing side apparatus or reading side apparatus), and outputting analyzed result information 343. The analyzed result information 343 contains information of determining whether the correction is required in the reading side apparatus.

The correction determination basic information generating unit 413 has functions of operating in a case where the correction requiring apparatus information is on the printing side apparatus (the image processing apparatus 301A) and generating and outputting the correction determination basic information 344. FIG. 6 illustrates example correction determination basic information. The correction determination basic information contains additional information, read image characteristic information, apparatus information of the reading side apparatus (apparatus ID), a reading date and so on.

Referring back to FIG. 12, the correction information generating unit 414 has functions of operating when the correction requiring apparatus information indicates the reading side apparatus (the image processing apparatus 301 B), and of generating correction information 445 based on the read image characteristic information 342 and the print image characteristic information acquired from the image processing apparatus 301A on the printing side with the print image characteristic information acquiring unit 415 based on the print identification information contained in the additional information 40 and outputting the generated correction information 345. FIG. 7 illustrates example correction information. The correction information contains items of a correction requirement, correction-contents, apparatus information (apparatus ID) of a reading side apparatus, a reading date, a print date, correction requiring apparatus information (the printing side apparatus or the reading side apparatus), and so on.

Referring back to FIG. 12, the information sending unit 416 has functions of sending the correction determination basic information 344 from the correction determination basic information generating unit 413 as the correction determination basic information 346, and of sending the correction information 345 from the correction information generating unit 414 as the correction information 347 to the image processing apparatus 301A.

Meanwhile, the information receiving unit 417 of the image processing apparatus 301A has functions of receiving the correction determination basic information 346 or the correction information 347 from the image processing apparatus 301 B and outputting these as received information 348.

The information analyzing unit 418 has functions of analyzing the received information 348 and determines contents of processes based on the correction requiring apparatus information (the printing side apparatus or the reading side apparatus) contained in the additional information of the correction determination basic information 346 or the correction information 347 and outputting analyzed result information 349. The analyzed result information 349 contains information of determining whether the correction is required in the printing side apparatus.

The correction information generating unit 419 has functions of operating when the correction requiring apparatus information is the printing side apparatus (the image processing apparatus 301A) and generating the correction information 450 based on the read image characteristic information contained in the correction determination basic information 346 received as the received information 348 and print image characteristic information acquired based on the print identification information contained in the additional information of the correction determination basic information 346 and outputting the generated correcting information 350. The correction information 350 is similar to the information illustrated in the correction information illustrated in FIG. 7. However, the correction requiring apparatus information (the printing side apparatus or the reading side apparatus) may not be used.

Referring back to FIG. 12, the correction information acquiring unit 420 has functions of operating when the correction requiring apparatus information indicates the reading side apparatus (the image processing apparatus 301 B) and of outputting the correction information 347, which is received as the received information 348, as the correction information 350 without a change.

The correction executing unit 421 has functions of correcting the density of the print function and the print position and so on of the image processing apparatus 301A based on the correction information 350 if the correction is required. Meanwhile, the correction executing unit 421 can correct only if predetermined conditions are satisfied in addition to the corrections at every time when the correction information 350 is given.

(Operations)

FIG. 8 illustrates a processing example of Embodiment 2.

Referring to FIG. 8, a user can carry out an image printing process with the image processing apparatus 301A without considering the correction of the print function in step S1. With this process, the print 339 is output (see FIG. 12). The image processing apparatus 301A on the printing side may be any one of the image processing apparatuses in the network 2 as long as the above functions are provided.

Thereafter, the user reads the image of the print 339 with the image processing apparatus 301 B as one of routine practices in step S2. With this process, the correction determination basic information 346 or the correction information 347 are sent to the image processing apparatus 301A on the printing side. The image processing apparatus 301 B on the reading side may be any one of the image processing apparatuses in the network 2 as long as the above functions are provided.

When the image processing apparatus 301 B on the reading side receives the correction determination basic information 346 or the correction information 347 from the image processing apparatus 301 B, the image processing apparatus 301A carries out the correction process in step S3.

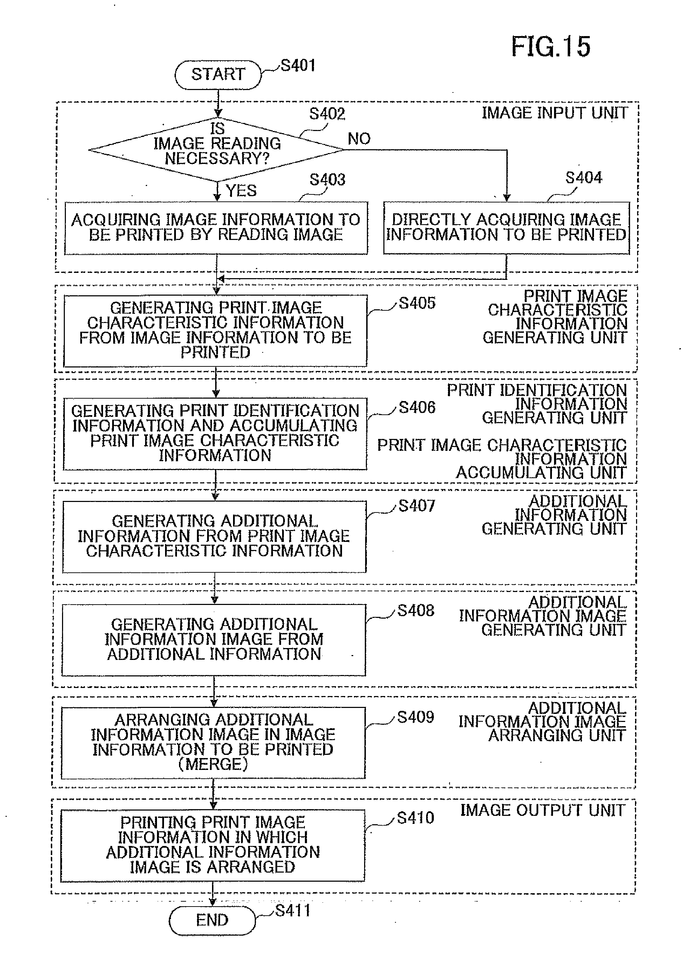

FIG. 15 is a flowchart illustrating an example image printing process (step S1 in FIG. 8) in the image processing apparatus 301A.

Referring to FIG. 15, after the image printing process is started in step S401, the image input unit 401 of the image processing apparatus 301A determines whether the image reading is necessary depending on a copy operation of the original 331, a FAX transmission operation of the original 331, or a print operation upon receipt of the image information 332 in step S402.

If it is determined that the image reading is necessary in YES of step S402, the image input unit 401 acquires the image information to be printed 333 by reading the image in step S403.

If it is determined that the image reading will not be done in NO of step S402, the image input unit 401 directly acquires the print image information 333 by reading the image in step S404.

Subsequently, the print image characteristic information generating unit 402 generates the print image characteristic information 334 from the image information to be printed 333 in step S405. Said differently, the print image information 333 is analyzed, and the density characteristic information, the position characteristic information or the like is calculated to render the calculated to be the print image characteristic information 334. If the raw data of the image is used as the print image characteristic information 334 without change, the complicated analysis can be skipped.

Subsequently, the print identification information generating unit 403 generates unique print identification information 335 identifying the print 339. The print image characteristic information accumulating unit 404 associates the generated print identification information 335 with the print image characteristic information 334, and accumulates the print image characteristic information 334 in the non-volatile storage unit 14 in step S406.

The additional information generating unit 405 generates the additional information 336 from the print image characteristic information 334 in step S407. Said differently, the print identification information (print ID), the apparatus information of the printing side apparatus (apparatus ID), the print date, the calculating method, the correction requiring apparatus information (printing side apparatus or the reading side apparatus) and so on are the additional information.

Next, the additional information image generating unit 406 generates the additional information image 337 from the additional information 336 in step S408. Said differently, a picture of the additional information 336 is created in conformity with a generation algorithm of a bar code, a background design or the like to thereby acquire the additional information image 337.

Then, the additional information image arranging unit 407 arranges the additional information image 337 on the image information to be printed 333 acquired by the image input unit 401 by merging or synthesizing the image information to be printed 333 and the additional information image 337 in step S409.

Thereafter, the image output unit 108 prints the print image information 37 in which the additional information image 337 is arranged and outputs the print 339 in step S410. Thus, the process ends in step S411.

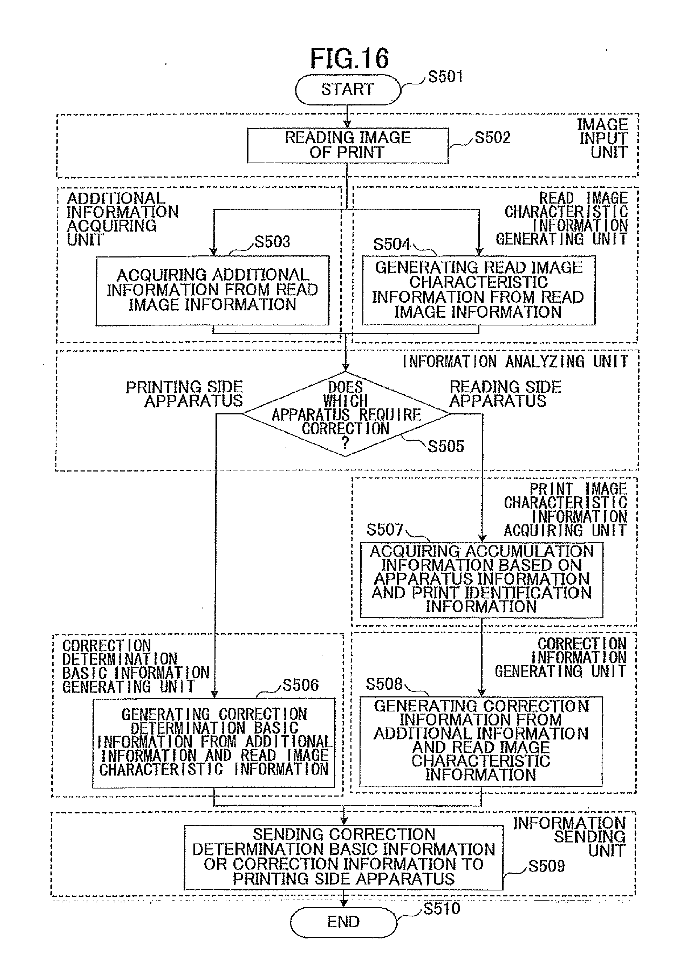

FIG. 16 is a flow chart illustrating an example image reading process (see step S2 of FIG. 8) in the image processing apparatus 301 B.

Referring to FIG. 16, after the image reading process is started in step S501, the image input unit 409 of the image processing apparatus 301B reads an image of the print 39 and acquires the read image information 340 in step S502.

The additional information acquiring unit 410 detects the additional information 341 from the read image information 340 and acquires the additional information 341 in step S503. The additional information image has a form from which the bar code, the background design and so on are detectable. Therefore, the additional information is detected in consideration of the form.

The read image characteristic information generating unit 411 generates the read image characteristic information 342 from the read image information 340 in parallel with the process in the additional information acquiring unit 410 in step S504. The read image information 340 is analyzed, and the density characteristic information, the position characteristic information and so on are calculated to render the calculated to be the read image characteristic information 342. If the raw data of the image is used as the read image characteristic information 342 without change, the complicated analysis can be skipped.

Subsequently, the information analyzing unit 112 analyzes the additional information 341 and determines the content of the process based on the correction requiring apparatus information (the printing side apparatus or the reading side apparatus) in step S505.

If the correction requiring apparatus information is the printing side apparatus (the image processing apparatus 301A) in "printing side apparatus" of step S505, the correction determination basic information generating unit 413 generates the correction determination basic information 344 from the additional information 341 and the read image characteristic information 342 in step S506. Said differently, the apparatus information of the reading side apparatus (apparatus information of the own apparatus), the reading data or the like are added to the additional information 341 and the read image characteristic information 342 to render the correction determination basic information 344.

If the correction requiring apparatus information is the reading side apparatus (image processing apparatus 301 B) in reading side apparatus of step S505, the print image characteristic information acquiring unit 415 acquires the accumulation information from the image processing apparatus 301A based on the apparatus information of the printing side apparatus and the print identification information in step S507.

Subsequently, the correction information generating unit 414 generates the correction information 345 from the print image characteristic information contained in the accumulation information, the read image characteristic information 342 or the like in step S508. Said differently, the print image characteristic information acquired by the print image characteristic information acquiring unit 415 and the read image characteristic information 342 are compared. If a density difference, a positional difference or the like exceeds a predetermined threshold value, it is determined that the correction is necessary, and the correction contents are acquired as a value of canceling the density difference, the positional difference or the like. The correction information 345 is acquired by adding the apparatus information of the reading side apparatus (the apparatus information of the own apparatus), the reading date, the print date (extracted from the additional information 341), the correction requiring apparatus information (the printing side apparatus or the reading side apparatus) or the like to the correction contents.

Next, the information sending unit 416 sends the correction determination basic information 344 generated by the correction determination basic information generating unit 413 as the correction determination basic information 346 or the correction information 345 generated by the correction information generating unit 414 as the correction information 347 to the image processing apparatus 301A on the printing side in step S509. Then, the process ends in step S510.

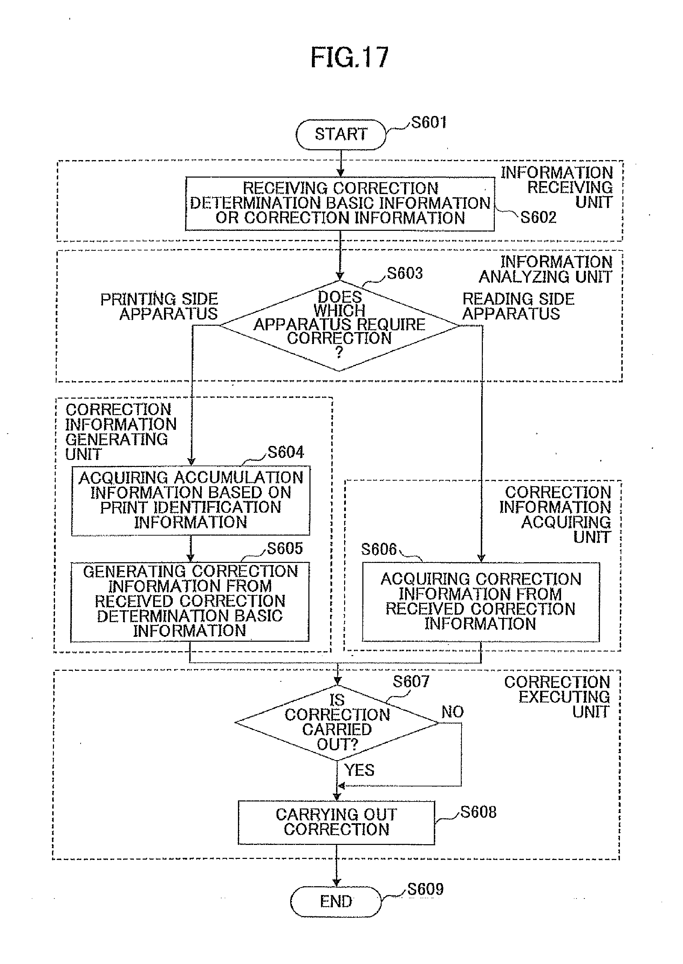

FIG. 17 is a flowchart illustrating an example image printing process (step S3 in FIG. 8) in the image processing apparatus 301A.

Referring to FIG. 17, if the correction process is started in step S601, the information receiving unit 417 receives the correction determination basic information 346 or the correction information 347 to render it to be the received information 348 in step S602.

Then, the information analyzing unit 418 analyzes the received information 348 and determines contents of processes based on the correction requiring apparatus information (the printing side apparatus or the reading side apparatus) contained in the additional information of the correction determination basic information 346 or the correction information 347 in step S603.

If the correction requiring apparatus information is the printing side apparatus (the image processing apparatus 301A) in "printing side apparatus" of step S603, the correction information generating unit 419 acquires accumulation information based on the print identification information contained in the additional information of the correction determination basic information in step S604, and generates the correction information 350 from the received correction determination basic information 346 and the accumulation information in step S605. Said differently, the print image characteristic information of the accumulation information and the read image characteristic information 41 are compared. If a density difference, a positional difference or the like exceeds a predetermined threshold value, it is determined that the correction is necessary, and the correction contents are acquired as a value of canceling the density difference, the positional difference or the like. Then, the correction information 350 is acquired by adding the apparatus information of the reading side apparatus (the apparatus information of the own apparatus), the reading date, the print date (extracted from the additional information 341) and so on to the correction contents.

If the correction requiring apparatus information is the reading side apparatus (the image processing apparatus 301B) in "reading side apparatus" of step S603, the correction information acquiring unit 420 acquires the received correction information 347 as the correction information 350 in step S606.

Thereafter, the correction executing unit 421 determines whether correction is carried out in step S607. For example, it is determined whether the correction is carried out with the following criteria.

(1) When it is determined at every generation and acquisition of the correction information 350, if the correction requirement is negative, it is determined that the correction is not carried out. When the correction requirement is determined on the reading side, if the correction information 47 is sent by only one image processing apparatus 301 B and the correction requirement is negative, the correction information 347 may not be sent. In this case, an item of the correction requirement in the correction information 347 becomes unnecessary.

(2) When the correction requirement is determined every generation and acquisition of the correction information 350, if the correction requirement is positive, the correction may immediately be carried out or the determination is further conducted by referring to the print date or the like. If the correction information 350 is based on the print 339 printed before a predetermined period from the current date by referring to the print date or the like, there is a likelihood that the correction contents are not appropriate for the current correction. Therefore, it may be determined that the correction is not carried out. Further, it is possible to prevent the correction from being carried out immediately after the start up of the image processing apparatus.

(3) It is possible to accumulate a predetermined number of correction information pieces 350 or accumulate the correction information 49 for a predetermined period under a control of the correction executing unit 421. Then, it is possible to determine whether the correction is to be carried out by comprehensively considering the accumulated correction information 350. For example, the correction requirements of the plural correction information pieces 350 and the correction contents in a case where the correction requirements are positive are ranked based on the number and print dates of the correction contents. By adopting the correction information 350 having the highest reliability, it is possible to determine whether the corrections are carried out. Meanwhile, the correction contents may be simply determined by dominating correction contents in their number (majority vote).

Subsequently, the correction executing unit 421 corrects the density of the print function, the print position or the like in conformity with the correction contents in step S607. Then, the process ends in step S609.

Modified Example of Embodiment 2

Although, in Embodiment 2, the print image characteristic information such as raw data of the image is accumulated in the image processing apparatus 301A on the printing in association with the print identification information identifying the print, the print identification information is added to the additional information, and the print image characteristic information can be identified from the print identification information. However, the Embodiments are not limited thereto. For example, if the print image characteristic information is small in its size, the print image characteristic information is embedded in the print as the additional information.

In Embodiment 2, the correction requirement is determined based on the print image characteristic information and the read image characteristic information. However, the Embodiments are not limited thereto. For example, it is possible to determine the correction requirement with the image processing apparatus 301B based on the additional information such as the bar codes and the background design whose line and dot sizes are previously known. In this case, the correction requirement itself may be determined by the image processing apparatus 301A on the printing side.

Further, although the additional information is embedded in the print in Embodiment 2, the Embodiments are not limited thereto. For example, it is possible to use "paper's finger print" inherent in each sheet of the paper for identifying the print instead of the above print identification information.

Embodiment 3

(Structure)

FIG. 1 illustrates an example system structure of Embodiment 3.

Referring to FIG. 1, plural image processing apparatuses 601A, 601 B... such as a multifunction peripheral (MFP), a printer, a facsimile (FAX) and a scanner are connected to a network 2 such as a local area network (LAN). Hereinafter, the image processing apparatus 601A has at least an image print function of a printer, a copy and a FAX (receive and print), and image processing apparatus 601 B has at least an image read function of a scanner, a copy and a FAX (send).

FIG. 2 illustrates an ordinary structure of the image processing apparatus 601 (601A, 601 B...).

Referring to FIG. 2, the image processing apparatus 601 includes a central processing unit (CPU) 12 connected to a bus 11, a memory 13, a non-volatile storage unit 14, an image input unit 15, an image output unit 16, and an interface unit 17.

The CPU 12 carries out main operations of the image processing apparatus 601.

The memory 13 stores a program and data used for the control process in the CPU 12.

The non-volatile storage unit 14 is a memory unit such as a Hard Disk Drive (HDD) and a flash memory of which data are not erased even if the image processing apparatus 1 is turned off.

The image input unit 15 reads an image from an original with an image reading mechanism (a scanner engine) or the like and acquires image information to be printed from an external Personal Computer (PC), a FAX, or the like.

The image output unit 16 prints image information on a paper with an image printing function (a printer engine) or outputs the image information to the external Personal Computer (PC) or the like.

The interface unit 17 communicates information with external apparatuses via the network 2.

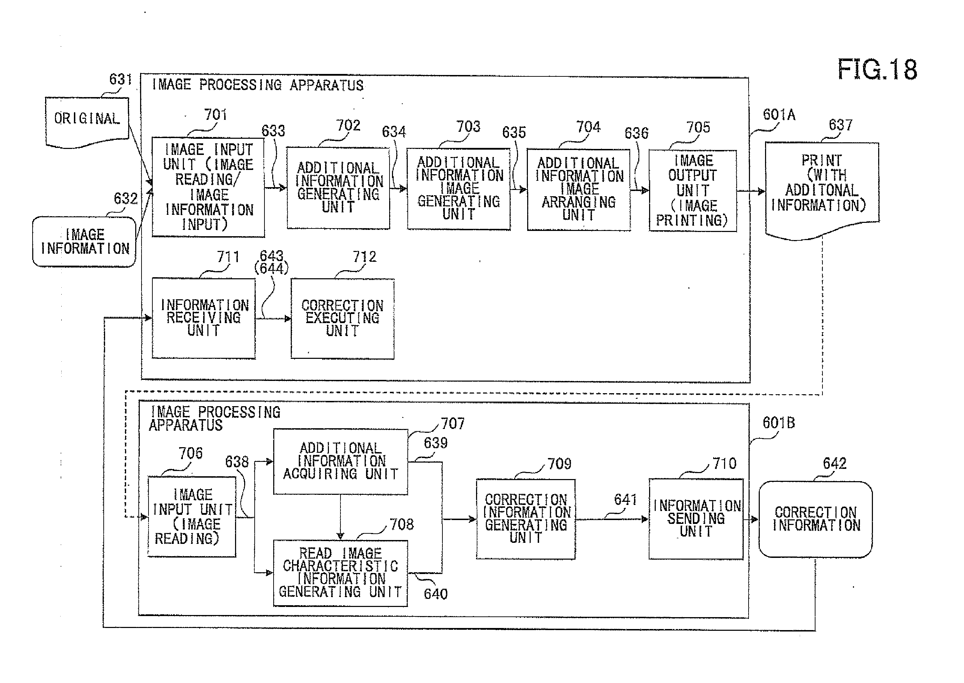

FIG. 18 illustrates a function unit for associating the image processing apparatuses 601A and 601 B.

Referring to FIG. 18, the image processing apparatus 601A provided on a side of inputting an original 631 or image information 632 and on a side of outputting a print 637 includes an image input unit 701, an additional information generating unit 702, an additional information image generating unit 703, an additional information image arranging unit 704, an image output unit 705, an information receiving unit 711, a correction information generating unit 116, and a correction executing unit 712.

The image processing apparatus 601 B on a side of inputting the print 637 and on a side of sending correction information 642 to the image processing apparatus 601A includes an image input unit 706, an additional information acquiring unit 707, a read image characteristic information generating unit 708, a correction information generating unit 709 and an information sending unit 710.

The image input unit 701 of the image processing apparatus 601A reads the original 631 or inputs the original 631 at a time of copying the original 631 and inputs the image information 632 when a print is requested by a PC or a fax is sent, and outputs image information to be printed 633.

The additional information generating unit 702 has functions of generating additional information 634 and of outputting the additional information 634.

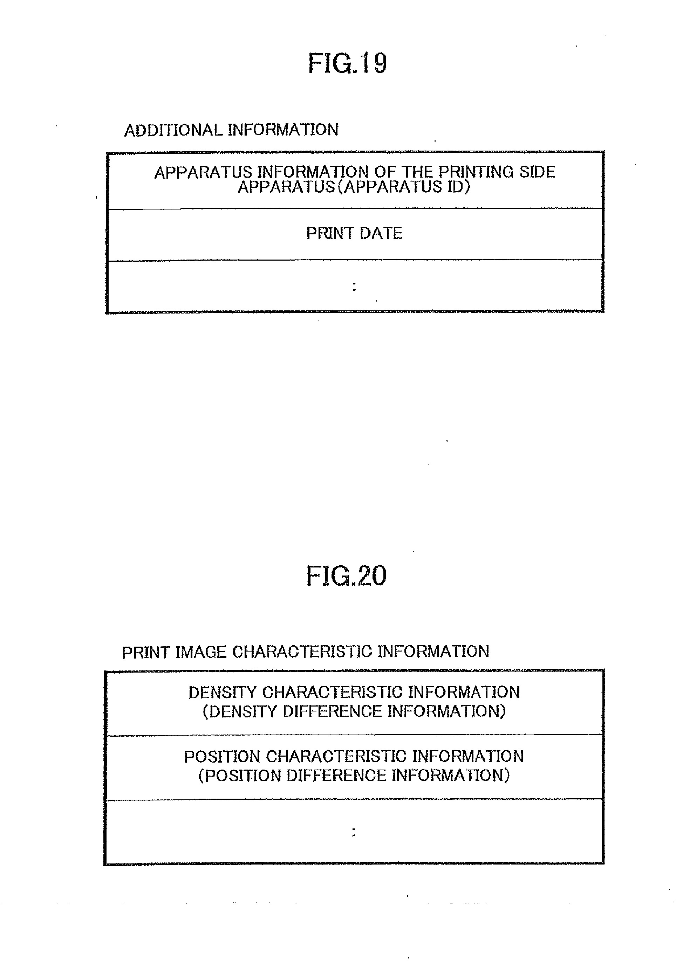

FIG. 19 illustrates example additional information. The example additional information contains apparatus information of a printing side apparatus (apparatus ID), print data and so on.

Referring back to FIG. 18, the additional information image generating unit 703 has a function of generating an additional information image 635 in conformity with a generation algorithm of a bar code, a background design or the like from the additional information 634. The additional information image 635 is an image of the additional information expressed by an image such as the bar code and the background design.

The additional information image arranging unit 704 has a function of arranging the additional information image 635 on the print image information 633 by merging or synthesizing this and a function of outputting image information 636.

The image output unit 705 has a function of printing based on the print image information 636 and outputs the print 637. The additional information is added to the print 637.

The image input unit 706 of the image processing apparatus 601 B has functions of reading the print 637 at times of copying, FAX transmitting and scanning and outputting read image information 638.

The additional information acquiring unit 707 has functions of detecting the additional information image from the read image information 638 and outputting the additional information 639.

The read image characteristic information generating unit 708 has functions of determining a calculating method for extracting characteristics of an image from a type or the like of the additional information image contained in the read image information 638, analyzing the read image information 638 in conformity with the calculating method, and generating and outputting read image characteristic information 640. For example, as to density, it is determined whether the image is a bar code or a background design and further whether the image is formed with a difference of print pixel numbers (e.g., a value of black pixel in case of monochrome print) or a difference of dot or line sizes.

FIG. 20 illustrates example read image characteristic information. The example read image characteristic information contains density characteristic information (density difference information), position characteristic information (position difference information) and so on. Here, the density characteristic information, the position characteristic information or the like is considered to be the density difference information, the position difference information or the like as differences from a bar code, a background design or the like. However, the density characteristic information, the position characteristic information may be obtained only from the read image information 638. In this case, the density characteristic information may be the average density of an entire image, the average density of designed portions of the entire image, a histogram of the density or the like. Instead of the density characteristic information and the position characteristic information, raw data of the image may be used. The density characteristic information, the position characteristic information or the like may be generated from the raw data of the image.

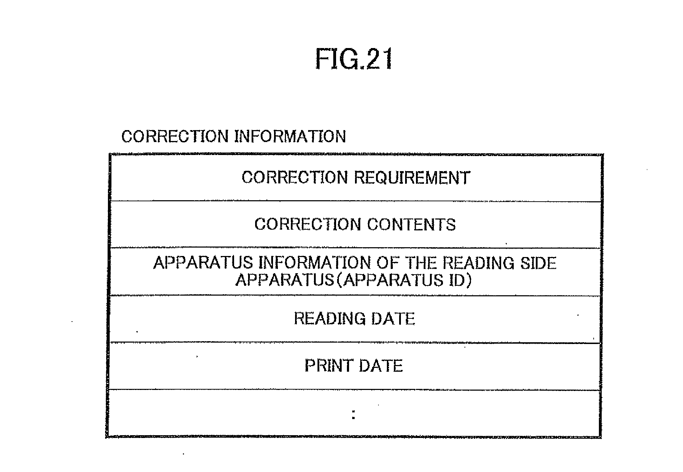

Referring back to FIG. 18, the correction information generating unit 709 has functions of generating correction information 641 based on the read image characteristic information 640 and outputting the generated correction information 641. FIG. 21 illustrates example correction information. The correction information contains items of a correction requirement, correction contents, apparatus information (apparatus ID) of the reading side apparatus, a reading date, a print date, and so on.

Referring back to FIG. 18, the information sending unit 710 has a function of sending the correction information 641 from the correction information generating unit 709 to the image processing apparatus 601A on the printing side as the correction information 642.

Meanwhile, the information receiving unit 711 of the image processing apparatus 601A has functions of receiving the correction information 642 from the image processing apparatus 601 B, and outputting these as a received information 643 (the correction information 642).

If the correction is required, the correction executing unit 712 has functions of correcting the density of the print function, the print position or the like of the image processing apparatus 601A based on the received correction information 644. Meanwhile, the correction executing unit 712 can correct only if predetermined conditions are satisfied in addition to the corrections at every time when the correction information 644 is given.

(Operations)

FIG. 8 is a flow chart of a processing example of Embodiment 3.

Referring to FIG. 8, a user can carry out an image printing process with the image processing apparatus 601A without considering the correction of the print function in step S1. With this process, the print 637 is output (see FIG. 18). The image processing apparatus 601A on the printing side may be any one of the image processing apparatuses in the network 2 as long as the above functions are provided.

Thereafter, the user reads the image of the print 637 with the image processing apparatus 601 B as one of routine practices in step S2. With the process, the correction information 642 is sent to the image processing apparatus 601A on the printing side. The image processing apparatus 601 B on the reading side may be any one of the image processing apparatuses in the network 2 as long as the above functions are provided.

When the image processing apparatus 1A on the reading side receives the correction information 642 from the image processing apparatus 601B, the image processing apparatus 601A carries out the correction process in step S3.

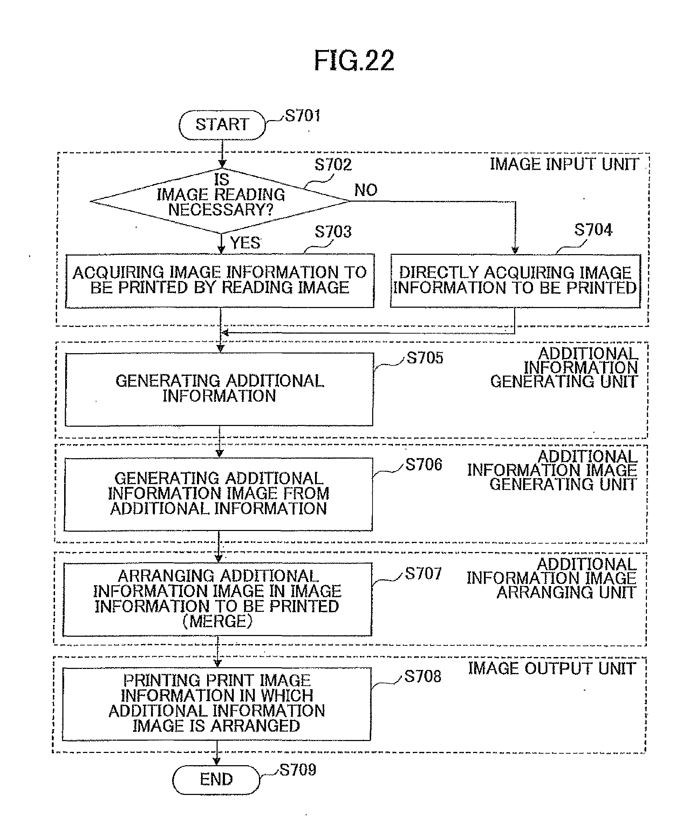

FIG. 22 is a flowchart illustrating an example image printing process (step S1 in FIG. 8) in the image processing apparatus 601A.

Referring to FIG. 22, after the image printing process is stated in step S701, the image input unit 701 of the image processing apparatus 601A determines whether the image reading is necessary depending on a copy operation of the original 631, a FAX transmission operation of the original 632, or a print operation upon receipt of the image information 632 in step S702.

If it is determined that the image reading is necessary in YES of step S702, the image input unit 701 acquires the image information to be printed 633 by reading the image in step S703.

If it is determined that the image reading will not be done in NO of step S702, the image input unit 701 directly acquires the image information to be printed 633 in step S704.

Subsequently, the additional information generating unit 702 generates the additional information 634 in step S705. Said differently, the additional information containing the apparatus information of the printing side apparatus (apparatus ID), the print date and so on.

Next, the additional information image generating unit 703 generates the additional information image 635 from the additional information 634 in step S706. Said differently, a picture of the additional information 634 is created in conformity with a generation algorithm of a bar code, a background design or the like to thereby acquire the additional information image 635.

Then, the additional information image arranging unit 704 arranges the additional information image 635 on the image information to be printed 633 acquired by the image input unit 701 by merging or synthesizing the image information to be printed 633 and the additional information image 635 in step S707.

Thereafter, the image output unit 705 prints the print image information in which the additional information image 635 is arranged and outputs the print 637 in step S708. Thus, the process ends in step S709.

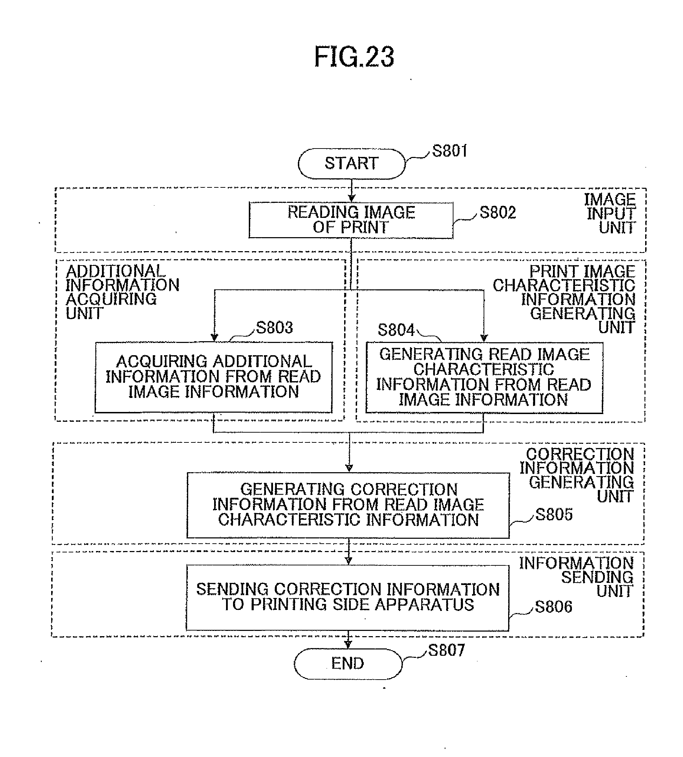

FIG. 23 is a flow chart illustrating an example image reading process (see step S2 of FIG. 8) in the image processing apparatus 601 B.

Referring to FIG. 23, after the image reading process is started in step S801, the image input unit 706 of the image processing apparatus 601 B reads an image of the print 637 and acquires the read image information 638 in step S802.

The additional information acquiring unit 707 detects the additional information 639 from the read image information 638 and acquires the additional information 639 in step S803. The additional information image has a form from which the bar code, the background design and so on are detectable. Therefore, the additional information is detected in consideration of the form. If the print date contained in the additional information 639 is more recent than the current data, the process may be ended without carrying out the following processes.

In parallel to the processes of the additional information acquiring unit 707, the read image characteristic information generating unit 708 determines a calculating method for extracting characteristics of the image from a type or the like of the additional information image contained in the read image information 638, analyzes the read image information 638 in conformity with the calculating method, and generates the read image characteristic information 640 in step S804.

For example, the analysis of the read image information 638 is carried out as follows if the correction requirement of the density of the bar code is determined.

(1) Extracting a bar code image $I_0$ from the read image information 638.
(2) Generating an ideal bar code image $I_1$ based on the additional information 639 indicated by the bar code image $I_0$. Because a relationship between the bar code image and content information of the bar code image is known, the ideal bar code image $I_1$ can be generated on the reading side.

(3) A difference of the numbers of print pixels or a difference of line widths of the bar code image $I_0$ and the ideal bar code image $I_1$ is accumulated to obtain a density difference. In a case where the difference of the numbers of print pixels is used, the following relationship is established, where relative coordinates of the bar code image are represented by x, y, and the content of a pixel is represented by I(x, y), and printing is represented by "1" and non-printing is represented by "0":

$$\text{Density difference} = \Sigma(I_0(x, y) - I_1(x, y))$$

When the difference of the line widths is used, the following relationship is established:

Density difference $= \Sigma$(Line width of the bar code image $I_0$ - Line width of the bar code image $I_1$)

Next, the correction information generating unit 709 generates the correction information 641 based on the read image characteristic information 640 in step S805. Said differently, if the density difference, the positional difference or the like from the known image characteristics exceed predetermined threshold values, it is determined that the correction is required and the correction contents are determined to be values canceling the density difference, the positional difference or the like. Then, the correction information 641 is acquired by adding the apparatus information of the reading side apparatus, the reading date, the print date (extracted from the additional information 639) and so on to the above correction contents.

Then, the information sending unit 710 sends the correction information 641 generated by the correction information generating unit 709 as the correction information 642 to the image processing apparatus 601A on the printing side in step S806. Thereafter, the process ends in step S807.

FIG. 10 is a flowchart illustrating an example correction process (step S3 in FIG. 8) in the image processing apparatus 601A.

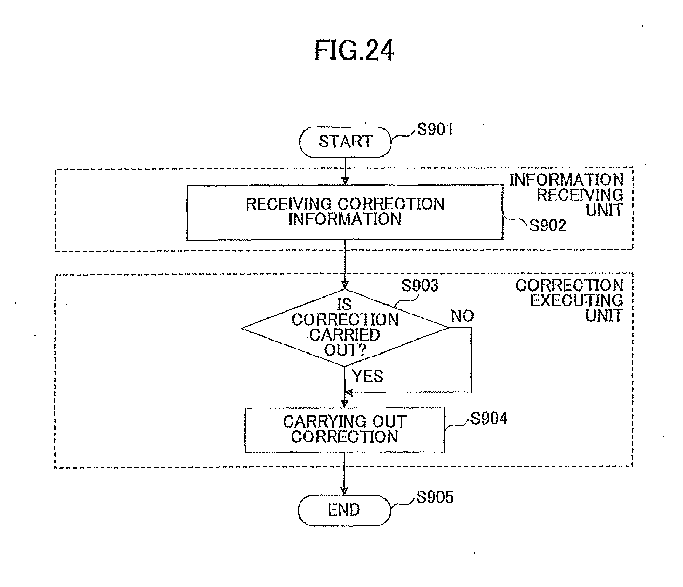

Referring to FIG. 24, if the correction process is started in step S901, the information receiving unit 711 receives the correction information 642 to render it to be the received information 643 being the correction information 644 in step S902.

Thereafter, the correction executing unit 712 determines whether correction is carried out in step S903. For example, it is determined whether the correction is carried out with the following criteria.

(1) When it is determined at every generation and acquisition of the correction information 644, if the correction requirement is negative, it is determined that the correction is not carried out. When the correction requirement is determined on the reading side, if the correction information 42 is sent by only one image processing apparatus 601 B and the correction requirement is negative, the correction information 642 may not be sent. In this case, an item of the correction requirement in the correction information 642 becomes unnecessary.

(2) When the correction requirement is determined every generation and acquisition of the correction information 644, if the correction requirement is positive, the correction may immediately be carried out or the determination is further conducted by referring to the print date or the like. If the correction information 644 is based on the print 637 printed before a predetermined period from the current date by referring to the print date or the like, there is a likelihood that the correction contents are not appropriate for the current correction. Therefore, it may be determined that the correction is not carried out. Further, it is possible to prevent the correction from being carried out immediately after the start up of the image processing apparatus.

(3) It is possible to accumulate a predetermined number of correction information pieces 644 or accumulate the correction information 644 for a predetermined period under a control of the correction executing unit 712. Then, it is possible to determine whether the correction is to be carried out by comprehensively considering the accumulated correction information. For example, the correction requirements of the plural correction information pieces 644 and the correction contents in a case where the correction requirements are positive are ranked based on the number and print dates of the correction contents. By adopting the correction information 644 having the highest reliability, it is possible to determine whether the corrections are carried out. Meanwhile, the correction contents may be simply determined by dominating correction contents in their number (majority vote).

Subsequently, the correction executing unit 712 corrects the density of the print function, the print position or the like in conformity with the correction contents in step S904. Then, the process ends in step S905.

Modified Example of Embodiment 3

Embodiment 3 describes the case where the correction information is generated by the image processing apparatus 601 B on the reading side. However, the image processing apparatus 601 B on the reading side sends the read image characteristic information or the like to the image processing apparatus 601A on the printing side, and the image processing apparatus 601A on the printing side may determine the correction requirement and generates the correction information.

Although the determination of the correction requirement with the image processing apparatus 601 B on the reading side based on the additional information such as the bar codes, the background design or the like whose line and dot sizes are previously known is described above, the Embodiments are not limited thereto. For example, the print image characteristic information is embedded in the print as the additional information with the image processing apparatus 601A on the printing side. The image processing apparatus on the reading side may generate the read image characteristic information generated from the read image information, and compare the print image characteristic information and the read image characteristic information to thereby determine a correction requirement. In this case, the image processing apparatus on the reading side may send the print image characteristic information and the read image characteristic information to the image processing apparatus on the printing side to thereby enable determining the correction requirement with the image processing apparatus on the printing side.

Further, the print image characteristic information such as raw data of the image may be accumulated in the image processing apparatus 601A on the printing in association with the print identification information identifying the print, and the print identification information may be added to the additional information. Then, the print image characteristic information can be referred to from the print identification information to thereby reduce the data amount of the additional information. In this case, the print image characteristic information such as the raw data of the image can be acquired using the print identification information as a key from the image processing apparatuses 601A and 601 B which determine the correction requirement. In this case, the image processing apparatus on the reading side may send the read image characteristic information to the image processing apparatus on the printing side to thereby enable determining the correction requirement with the image processing apparatus on the printing side.

Further, although the additional information is embedded in the print in Embodiment 3, the Embodiments are not limited thereto. For example, it is possible to use "paper's finger print" inherent in each sheet of the paper for identifying the print instead of the above print identification information.

As described, in the image processing system of the present invention, by associating the image processing apparatuses connected by the network, the print function can be automatically corrected. Therefore, the print quality is maintained and the loads on the users can be reduced.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority or inferiority of the invention. Although the embodiment of the present invention has been described in detail, it should be understood that various changes, substitutions, and alterations could be made thereto without departing from the spirit and scope of the invention.

This patent application is based on Japanese Priority Patent Application No. 2010-208210 filed on September 16, 2010, Japanese Priority Patent Application No. 2010-208211 filed on September 16, 2010, and Japanese Priority Patent Application No. 2010-208212 filed on September 16, 2010, the entire contents of which are hereby incorporated herein by reference.

**Claims**

1. An image processing apparatus comprising:

   an image printing part configured to output a print by printing based on image information to be printed;
   a correction executing part configured to carry out a correction for the print function based on either one or both of:

      read image characteristic information indicative of characteristics of read image information used in another image processing apparatus in reading an image of the print; and
      print image characteristic information indicative of the image information to be printed, and further based on:

      a correction requirement for a print function of the first image processing apparatus and correction information containing a correction content in a case where the correction requirement is positive.

2. The image processing apparatus according to claim 1,
   wherein the image information to be printed is formed by embedding additional information containing apparatus information identifying the image processing apparatus and the print, and
   the print function is received from the other image processing apparatus.

3. The image processing apparatus according to claim 1,
   wherein the image information to be printed is formed by embedding additional information containing apparatus information identifying the image processing apparatus, and
the print function is received from the other image processing apparatus.

4. An image processing apparatus comprising:

   an image reading part configured to read an image of the print used in another image processing apparatus and generate read image information; and
   a read image characteristic information generating part configured to generate read image characteristic information indicative of characteristics of read image information used in generating correction information containing a correction requirement for a print function of the other image processing apparatus and correction information containing a correction content in a case where the correction requirement is positive.

5. The image processing apparatus according to claim 4,
   wherein the print is formed by embedding additional information containing apparatus information for identifying the other image processing apparatus in which the print is printed.

6. The image processing apparatus according to claim 4,
   wherein the print is formed by embedding additional information containing apparatus information for identifying the other image processing apparatus in which the print is printed, and print identification information for identifying the print.

7. An image processing system comprising an image processing apparatus in accordance with any one or more of claims 1 to 6.

8. An image processing system including a plurality of image processing apparatuses in accordance with any one of claims 1 to 7 and connected by a network, the image processing apparatus system comprising:

   an image printing part configured to output a print by printing based on image information to be printed with a first image processing apparatus;
   an image reading part configured to read an image of the print and generate read image information with a second image processing apparatus;
   a correction information generating part configured to generate a correction requirement for a print function of the first image processing apparatus and correction information containing a correction content in a case where the correction requirement is positive based on read image characteristic information indicative of characteristics of the read image information, print image characteristic information indicative of the image information to be printed, or the read image characteristic information and the print image characteristic information; and

a correction executing part configured to carry out a correction for the print function based on the correction information in the first image processing apparatus.

9. The image processing system according to claim 8, wherein the image printing part prints after embedding additional information containing apparatus information for identifying the first image processing apparatus which has printed and the print image characteristic information, and

the correction information generating part generates the correction information based on the read image characteristic information and the print image characteristic information.

10. The image processing system according to claim 9, wherein the correction information generating part is provided in the first image processing apparatus, the first image processing apparatus includes a print image characteristic information generating part configured to generate the print image characteristic information,

the second image processing apparatus includes an additional information acquiring part configured to acquire the additional information from the read image information;

a read image characteristic information generating part configured to generate the read image characteristic information from the read image information; and

a correction determination basic information sending part configured to send the additional information and the read image characteristic information as correction determination basic information based on the apparatus information to the first image processing apparatus.

11. The image processing system according to claim 9, wherein the correction information generating part is provided in the second image processing apparatus, the first image processing apparatus includes a print image characteristic information generating part configured to generate the print image characteristic information from the image information to be printed; and

an accumulating part configured to accumulate the print image characteristic information in association with the print identification information, and

the second image processing apparatus includes

an additional information acquiring part configured to acquire the additional information from the read image information;

a read image characteristic information generating part configured to generate the read image characteristic information from the read image information; and

a correction determination basic information sending part configured to send the additional information and the read image characteristic information as correction determination basic information based on the apparatus information to the first image processing apparatus.

12. The image processing system according to claim 8, wherein the correction information generating part is provided in the first image processing apparatus, the first image processing apparatus includes a print image characteristic information generating part configured to generate the print image characteristic information from the image information to be printed; and

an accumulating part configured to accumulate the print image characteristic information in association with the print identification information, and

the second image processing apparatus includes an additional information acquiring part configured to acquire the additional information from the read image information;

a read image characteristic information generating part configured to generate the read image characteristic information from the read image information; and

a correction determination basic information sending part configured to send the additional information and the read image characteristic information as correction determination basic information based on the apparatus information to the first image processing apparatus.

13. The image processing system according to claim 8, wherein the correction information generating part is provided in the second image processing apparatus,

the first image processing apparatus includes

a print image characteristic information generating part configured to generate the print image characteristic information from the image information to be printed; and

an accumulating part configured to accumulate the print image characteristic information in association with the print identification information, and

the second image processing apparatus includes an additional information acquiring part configured to acquire the additional information from the read image information;

a read image characteristic information generating part configured to generate the read image characteristic information from the read image information;

a print image characteristic information acquiring part configured to acquire the print image characteristic information from the first image processing apparatus based on the print identification information; and

a correction information sending part configured to send the correction information based on the apparatus information to the first image processing apparatus.

14. The image processing system according to claim 8, wherein the correction information generating part generates the correction requirement for the print function of the first image processing apparatus and correction information containing the correction content in the case where the correction requirement is positive based on read image characteristic information indicative of characteristics of the read image information and the print image characteristic information, and the print image characteristic information is known.

15. The image processing system according to claim 14, wherein the correction information generating part is provided in the second processing apparatus, and the second image processing apparatus includes

an additional information acquiring part configured to acquire the additional information from the read image information;

a read image characteristic information generating part configured to generate the read image characteristic information from the read image information; and

a correction determination basic information sending part configured to send the correction information based on the apparatus information to the first image processing apparatus.

16. The image processing system according to claim 14, wherein the correction information generating part is provided in the first image processing apparatus, and

the second image processing apparatus includes

an additional information acquiring part configured to acquire the additional information from the read image information;

a read image characteristic information generating part configured to generate the read image characteristic information from the read image information; and

a sending part configured to send the read image characteristic information based on the apparatus information to the first image processing apparatus.

# FIG.1

1A, 301A, 601A                    1B, 301B, 601B

| IMAGE PROCESSING APPARATUS (IMAGE PRINTING FUNCTION) | IMAGE PROCESSING APPARATUS (IMAGE READING FUNCTION) | ... |

2

NETWORK

FIG.2

IMAGE PROCESSING APPARATUS 1, 300, 600

CPU 12

IMAGE INPUT UNIT (IMAGE READING/IMAGE INFORMATION INPUT) 15

IMAGE OUTPUT UNIT (IMAGE PRINTING/IMAGE INFORMATION OUTPUT) 16

BUS 11

MEMORY 13

NON-VOLATILE STORAGE UNIT 14

INTERFACE UNIT 17

NETWORK 2

FIG.3

EP 2 432 210 A2

# FIG.4

PRINT IMAGE CHARACTERISTIC INFORMATION

| DENSITY CHARACTERISTIC INFORMATION |
| --- |
| POSITION CHARACTERISTIC INFORMATION |
| : |

# FIG.5

ADDITIONAL INFORMATION

| PRINT IMAGE CHARACTERISTIC INFORMATION |
| --- |
| APPARATUS INFORMATION OF THE PRINTING SIDE APPARATUS(APPARATUS ID) |
| PRINT DATE |
| CALCULATING METHOD |
| CORRECTION REQUIRING APPARATUS INFORMATION (PRINTING SIDE APPARATUS OR READING SIDE APPARATUS) |
| : |

# FIG.6

CORRECTION DETERMINATION BASIC INFORMATION

| ADDITIONAL INFORMATION |
|---|
| PRINT IMAGE CHARACTERISTIC INFORMATION |
| APPARATUS INFORMATION OF THE READING SIDE APPARATUS(APPARATUS ID) |
| READING DATE |
| : |

# FIG.7

CORRECTION INFORMATION

| CORRECTION REQUIREMENT |
|---|
| CORRECTION CONTENTS |
| APPARATUS INFORMATION OF THE READING SIDE APPARATUS(APPARATUS ID) |
| READING DATE |
| PRINT DATE |
| CORRECTION REQUIRING APPARATUS INFORMATION (PRINTING SIDE APPARATUS OR READING SIDE APPARATUS) |
| : |

# FIG.8

S1

IMAGE PRINTING
PROCESS IN
IMAGE PROCESSING
APPARATUS 1A,
300A, 600A

PRINT

S2

IMAGE READING
PROCESS IN
IMAGE PROCESSING
APPARATUS 1B,
300B, 600B

CORRECTION DETERMINATION
BASIC INFORMATION
OR
CORRECTION INFORMATION

S3

CORRECTING
PROCESS IN
IMAGE PROCESSING
APPARATUS 1A,
300A, 600A

EP 2 432 210 A2

# FIG.9

START — S101

IMAGE INPUT UNIT

S102
IS IMAGE READING NECESSARY?
NO

YES — S103
ACQUIRING IMAGE INFORMATION TO BE PRINTED BY READING IMAGE

S104
DIRECTLY ACQUIRING IMAGE INFORMATION TO BE PRINTED

GENERATING PRINT IMAGE CHARACTERISTIC INFORMATION FROM IMAGE INFORMATION TO BE PRINTED — S105
PRINT IMAGE CHARACTERISTIC INFORMATION GENERATING UNIT

GENERATING ADDITIONAL INFORMATION FROM PRINT IMAGE CHARACTERISTIC INFORMATION — S106
ADDITIONAL INFORMATION GENERATING UNIT

GENERATING ADDITIONAL INFORMATION IMAGE FROM ADDITIONAL INFORMATION — S107
ADDITIONAL INFORMATION IMAGE GENERATING UNIT

ARRANGING ADDITIONAL INFORMATION IMAGE IN IMAGE INFORMATION TO BE PRINTED (MERGE) — S108
ADDITIONAL INFORMATION IMAGE ARRANGING UNIT

PRINTING PRINT IMAGE INFORMATION IN WHICH ADDITIONAL INFORMATION IMAGE IS ARRANGED — S109
IMAGE OUTPUT UNIT

END — S110

26

# FIG.10

START — S201

**IMAGE INPUT UNIT**

READING IMAGE OF PRINT — S202

**ADDITIONAL INFORMATION ACQUIRING UNIT**

ACQUIRING ADDITIONAL INFORMATION FROM READ IMAGE INFORMATION — S203

**PRINT IMAGE CHARACTERISTIC INFORMATION GENERATING UNIT**

S204 — GENERATING READ IMAGE CHARACTERISTIC INFORMATION FROM READ IMAGE INFORMATION

**INFORMATION ANALYZING UNIT**

PRINTING SIDE APPARATUS ← DOES WHICH APPARATUS REQUIRE CORRECTION ? → READING SIDE APPARATUS — S205

**CORRECTION DETERMINATION BASIC INFORMATION GENERATING UNIT**

GENERATING CORRECTION DETERMINATION BASIC INFORMATION FROM ADDITIONAL INFORMATION AND READ IMAGE CHARACTERISTIC INFORMATION — S206

**CORRECTION INFORMATION GENERATING UNIT**

S207 — GENERATING CORRECTION INFORMATION FROM ADDITIONAL INFORMATION AND READ IMAGE CHARACTERISTIC INFORMATION

**INFORMATION SENDING UNIT**

SENDING CORRECTION DETERMINATION BASIC INFORMATION OR CORRECTION INFORMATION TO PRINTING SIDE APPARATUS — S208

END — S209

# FIG.11

```
              ( START )──S301

┌─────────────────────────────────────────────────┐
│              RECEIVING CORRECTION       INFORMATION │
│   DETERMINATION BASIC INFORMATION       RECEIVING  │
│      OR CORRECTION INFORMATION          UNIT       │
│                              S302                  │
└─────────────────────────────────────────────────┘

┌─────────────────────────────────────────────────┐
│                          S303      INFORMATION     │
│                                    ANALYZING UNIT  │
│  PRINTING SIDE      DOES            READING SIDE   │
│  APPARATUS          WHICH           APPARATUS      │
│             APPARATUS REQUIRE                      │
│                 CORRECTION                         │
│                      ?                            │
└─────────────────────────────────────────────────┘
```

| CORRECTION INFORMATION GENERATING UNIT | CORRECTION INFORMATION ACQUIRING UNIT |
|---|---|
| S304 | S305 |
| GENERATING CORRECTION INFORMATION FROM RECEIVED CORRECTION DETERMINATION BASIC INFORMATION | ACQUIRING CORRECTION INFORMATION FROM RECEIVED CORRECTION INFORMATION |

```
┌─────────────────────────────────────────────────┐
│                    S306         CORRECTION         │
│              IS                 EXECUTING          │
│           CORRECTION    NO      UNIT              │
│            CARRIED                                 │
│             OUT?                                   │
│              YES                                   │
│                                                   │
│       CARRYING OUT            S307                 │
│        CORRECTION                                 │
└─────────────────────────────────────────────────┘

              ( END )──S308
```

FIG.12

# FIG.13

ACCUMULATION INFORMATION

| |
|---|
| PRINT IDENTIFICATION INFORMATION (PRINT ID) |
| PRINT IMAGE CHARACTERISTIC INFORMATION |
| PRINT DATE |
| CALCULATING METHOD |
| : |

# FIG.14

ADDITIONAL INFORMATION

| |
|---|
| PRINT IDENTIFICATION INFORMATION (PRINT ID) |
| APPARATUS INFORMATION OF THE PRINTING SIDE APPARATUS (APPARATUS ID) |
| PRINT DATE |
| CALCULATING METHOD |
| CORRECTION REQUIRING APPARATUS INFORMATION (PRINTING SIDE APPARATUS OR READING SIDE APPARATUS) |
| : |

# FIG.15

START — S401

IMAGE INPUT UNIT

S402
IS IMAGE READING NECESSARY? — NO

YES — S403
ACQUIRING IMAGE INFORMATION TO BE PRINTED BY READING IMAGE

S404
DIRECTLY ACQUIRING IMAGE INFORMATION TO BE PRINTED

GENERATING PRINT IMAGE CHARACTERISTIC INFORMATION FROM IMAGE INFORMATION TO BE PRINTED — S405

PRINT IMAGE CHARACTERISTIC INFORMATION GENERATING UNIT

GENERATING PRINT IDENTIFICATION INFORMATION AND ACCUMULATING PRINT IMAGE CHARACTERISTIC INFORMATION — S406

PRINT IDENTIFICATION INFORMATION GENERATING UNIT

PRINT IMAGE CHARACTERISTIC INFORMATION ACCUMULATING UNIT

GENERATING ADDITIONAL INFORMATION FROM PRINT IMAGE CHARACTERISTIC INFORMATION — S407

ADDITIONAL INFORMATION GENERATING UNIT

GENERATING ADDITIONAL INFORMATION IMAGE FROM ADDITIONAL INFORMATION — S408

ADDITIONAL INFORMATION IMAGE GENERATING UNIT

ARRANGING ADDITIONAL INFORMATION IMAGE IN IMAGE INFORMATION TO BE PRINTED (MERGE) — S409

ADDITIONAL INFORMATION IMAGE ARRANGING UNIT

PRINTING PRINT IMAGE INFORMATION IN WHICH ADDITIONAL INFORMATION IMAGE IS ARRANGED — S410

IMAGE OUTPUT UNIT

END — S411

# FIG.16

START ⟋S501

READING IMAGE OF PRINT ⟋S502 — IMAGE INPUT UNIT

ADDITIONAL INFORMATION ACQUIRING UNIT

⟋S503
ACQUIRING ADDITIONAL INFORMATION FROM READ IMAGE INFORMATION

READ IMAGE CHARACTERISTIC INFORMATION GENERATING UNIT

S504
GENERATING READ IMAGE CHARACTERISTIC INFORMATION FROM READ IMAGE INFORMATION

INFORMATION ANALYZING UNIT

PRINTING SIDE APPARATUS ← DOES WHICH APPARATUS REQUIRE CORRECTION ? → READING SIDE APPARATUS ⟍S505

PRINT IMAGE CHARACTERISTIC INFORMATION ACQUIRING UNIT

S507
ACQUIRING ACCUMULATION INFORMATION BASED ON APPARATUS INFORMATION AND PRINT IDENTIFICATION INFORMATION

CORRECTION DETERMINATION BASIC INFORMATION GENERATING UNIT

⟋S506
GENERATING CORRECTION DETERMINATION BASIC INFORMATION FROM ADDITIONAL INFORMATION AND READ IMAGE CHARACTERISTIC INFORMATION

CORRECTION INFORMATION GENERATING UNIT

S508
GENERATING CORRECTION INFORMATION FROM ADDITIONAL INFORMATION AND READ IMAGE CHARACTERISTIC INFORMATION

INFORMATION SENDING UNIT

SENDING CORRECTION DETERMINATION BASIC INFORMATION OR CORRECTION INFORMATION TO PRINTING SIDE APPARATUS ⟋S509

END ⟋S510

# FIG.17

START — S601

INFORMATION RECEIVING UNIT

RECEIVING CORRECTION DETERMINATION BASIC INFORMATION OR CORRECTION INFORMATION — S602

INFORMATION ANALYZING UNIT

PRINTING SIDE APPARATUS ← DOES WHICH APPARATUS REQUIRE CORRECTION ? — S603 → READING SIDE APPARATUS

CORRECTION INFORMATION GENERATING UNIT

ACQUIRING ACCUMULATION INFORMATION BASED ON PRINT IDENTIFICATION INFORMATION — S604

GENERATING CORRECTION INFORMATION FROM RECEIVED CORRECTION DETERMINATION BASIC INFORMATION — S605

CORRECTION INFORMATION ACQUIRING UNIT

S606 — ACQUIRING CORRECTION INFORMATION FROM RECEIVED CORRECTION INFORMATION

CORRECTION EXECUTING UNIT

IS CORRECTION CARRIED OUT? — S607
NO
YES

CARRYING OUT CORRECTION — S608

END — S609

FIG.18

IMAGE PROCESSING APPARATUS

631 ORIGINAL

632 IMAGE INFORMATION

701 IMAGE INPUT UNIT (IMAGE READING/ IMAGE INFORMATION INPUT)

633

702 ADDITIONAL INFORMATION GENERATING UNIT

634

703 ADDITIONAL INFORMATION IMAGE GENERATING UNIT

635

704 ADDITIONAL INFORMATION IMAGE ARRANGING UNIT

636

705 IMAGE OUTPUT UNIT (IMAGE PRINTING)

601A

637 PRINT (WITH ADDITONAL INFORMATION)

711 INFORMATION RECEIVING UNIT

643 (644)

712 CORRECTION EXECUTING UNIT

IMAGE PROCESSING APPARATUS

706 IMAGE INPUT UNIT (IMAGE READING)

638

707 ADDITIONAL INFORMATION ACQUIRING UNIT

639

708 READ IMAGE CHARACTERISTIC INFORMATION GENERATING UNIT

640

709 CORRECTION INFORMATION GENERATING UNIT

641

601B

710 INFORMATION SENDING UNIT

642 CORRECTION INFORMATION

EP 2 432 210 A2

34

# FIG.19

ADDITIONAL INFORMATION

| APPARATUS INFORMATION OF THE PRINTING SIDE APPARATUS (APPARATUS ID) |
|---|
| PRINT DATE |
| ⋮ |

# FIG.20

PRINT IMAGE CHARACTERISTIC INFORMATION

| DENSITY CHARACTERISTIC INFORMATION (DENSITY DIFFERENCE INFORMATION) |
|---|
| POSITION CHARACTERISTIC INFORMATION (POSITION DIFFERENCE INFORMATION) |
| ⋮ |

# FIG.21

CORRECTION INFORMATION

| CORRECTION REQUIREMENT |
|---|
| CORRECTION CONTENTS |
| APPARATUS INFORMATION OF THE READING SIDE APPARATUS (APPARATUS ID) |
| READING DATE |
| PRINT DATE |
| : |

EP 2 432 210 A2

# FIG.22

START — S701

**IMAGE INPUT UNIT**

S702
IS IMAGE READING NECESSARY?
— NO

YES — S703

ACQUIRING IMAGE INFORMATION TO BE PRINTED BY READING IMAGE

S704
DIRECTLY ACQUIRING IMAGE INFORMATION TO BE PRINTED

GENERATING ADDITIONAL INFORMATION — S705
**ADDITIONAL INFORMATION GENERATING UNIT**

GENERATING ADDITIONAL INFORMATION IMAGE FROM ADDITIONAL INFORMATION — S706
**ADDITIONAL INFORMATION IMAGE GENERATING UNIT**

ARRANGING ADDITIONAL INFORMATION IMAGE IN IMAGE INFORMATION TO BE PRINTED (MERGE) — S707
**ADDITIONAL INFORMATION IMAGE ARRANGING UNIT**

PRINTING PRINT IMAGE INFORMATION IN WHICH ADDITIONAL INFORMATION IMAGE IS ARRANGED — S708
**IMAGE OUTPUT UNIT**

END — S709

37

# FIG.23

START — S801

IMAGE INPUT UNIT

READING IMAGE OF PRINT — S802

ADDITIONAL INFORMATION ACQUIRING UNIT

PRINT IMAGE CHARACTERISTIC INFORMATION GENERATING UNIT

ACQUIRING ADDITIONAL INFORMATION FROM READ IMAGE INFORMATION — S803

GENERATING READ IMAGE CHARACTERISTIC INFORMATION FROM READ IMAGE INFORMATION — S804

CORRECTION INFORMATION GENERATING UNIT

GENERATING CORRECTION INFORMATION FROM READ IMAGE CHARACTERISTIC INFORMATION — S805

INFORMATION SENDING UNIT

SENDING CORRECTION INFORMATION TO PRINTING SIDE APPARATUS — S806

END — S807

# FIG.24

```
                    ┌──────────┐  ╱S901
                    │  START   ├─
                    └────┬─────┘
                         │
   ┌─────────────────────┼─────────────────────────┐
   │                     ▼          INFORMATION     │
   │       ┌──────────────────────────┐  RECEIVING  │
   │       │  RECEIVING CORRECTION     │    UNIT     │
   │       │      INFORMATION          │             │
   │       └──────────────────────────┘  ╲S902      │
   └─────────────────────┼─────────────────────────┘

   ┌─────────────────────┼─────────────────────────┐
   │                     ▼      S903    CORRECTION  │
   │              ╱─────────────╲       EXECUTING   │
   │             ╱      IS        ╲        UNIT      │
   │            ╱   CORRECTION      ╲   NO           │
   │            ╲    CARRIED        ╱────────┐       │
   │             ╲     OUT?        ╱         │       │
   │              ╲─────────────╱           │       │
   │                     │ YES              │       │
   │                     ▼◄─────────────────┘       │
   │       ┌──────────────────────────┐   ╱S904     │
   │       │      CARRYING OUT         ├─            │
   │       │       CORRECTION          │             │
   │       └──────────────────────────┘             │
   └─────────────────────┼─────────────────────────┘
                         │
                         ▼        ╱S905
                    ┌──────────┐
                    │   END    ├─
                    └──────────┘
```

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007295244 A
- JP 2010208210 A
- JP 2010208211 A
- JP 2010208212 A